Europäisches Patentamt

European Patent Office

Office européen des brevets

(19)

(11) **EP 1 659 445 A1**

(12) **EUROPEAN PATENT APPLICATION**
published in accordance with Art. 158(3) EPC

(43) Date of publication:
**24.05.2006 Bulletin 2006/21**

(51) Int Cl.:
***G02F 1/35*** (1974.07) ***G02B 5/28*** (1968.09)

(21) Application number: **04746080.3**

(22) Date of filing: **11.06.2004**

(86) International application number:
**PCT/JP2004/008567**

(87) International publication number:
**WO 2004/111717 (23.12.2004 Gazette 2004/52)**

(84) Designated Contracting States:
**DE FR GB IT**

(30) Priority: **13.06.2003 JP 2003169870**
**02.07.2003 JP 2003270443**
**01.12.2003 JP 2003401970**

(71) Applicant: **NIPPON TELEGRAPH AND**
**TELEPHONE CORPORATION**
**Tokyo 100-8116 (JP)**

(72) Inventors:
• **SHIMOKOZONO, Makoto**
**NTT IP Center**
**Musashino-shi**
**Tokyo 180-8585 (JP)**

• **FUJIURA, Kazuo**
**NTT IP Center**
**Musashino-shi**
**Tokyo 180-8585 (JP)**
• **TOYODA, Seiji**
**NTT IP Center**
**Musashino-shi**
**Tokyo 180-8585 (JP)**
• **IMAI, Tadayuki**
**NTT IP Center**
**Musashino-shi**
**Tokyo 180-8585 (JP)**

(74) Representative: **HOFFMANN EITLE**
**Patent- und Rechtsanwälte**
**Arabellastrasse 4**
**D-81925 München (DE)**

(54) **VARIABLE WAVELENGTH OPTICAL FILTER**

(57) A wavelength tunable optical filter (1) comprises a dielectric crystal portion (2) comprised of a dielectric crystal having a cubic system and exhibiting a quadratic electro-optic effect, a mirror portion (5, 6) constituting a Fabry-Perot etalon in cooperation with said dielectric crystal portion, and an electrode (3, 4) configured to apply a voltage to said dielectric crystal portion thereby to change a wavelength of light transmitting through said etalon on a basis of said electro-optic effect. According to the configuration, since the dielectric crystal having a cubic system and exhibiting a quadratic electro-optic effect is used, there is provided a wavelength tunable optical filter that is capable of operating at high-speed on application of a low voltage.

FIG.1

LIGHT INCIDENT DIRECTION

EP 1 659 445 A1

**Description**

Technical Field

The present invention relates to a wavelength tunable optical filter for use in optical communication, optical measurement and the like.

Background Art

In addition to a realization of a high-capacity, high-speed, and sophisticated network, an optical communication has been applied to an access network, an example of which is introduction of fiber-to-the-home. In the future, a further sophistication of a communication network will be required, with an expectation of a more effective utilization of wavelengths.

In a Dense Wavelength Division Multiplexing (D-WDM) system, more than two optical signals at closely spaced wavelengths are multiplexed and transmitted via a single optical wave-guide, thereby enhancing a communication capacity. In a transmitting side, more than two optical signals having different wavelengths at extremely narrow intervals of 0.8 nm from one another are multiplexed over a range of several tens nanometers, thereby enabling a highly densified signals to be transmitted. Accordingly in a receiving side, a necessary signal can be retrieved by receiving only the signal having a predetermined wavelength out of the lights transmitted. In order to accurately retrieve only the necessary signal out of highly multiplexed signals, there has to be used an optical filter that assuredly maintains a sufficient passband and has a steep spectrum so as to obtain a sufficiently small cross talk between neighboring channels.

Such optical filters are indispensable for use not only in retrieving an optical signal having a predetermined wavelength in a network transmitting more than two optical signals having different wavelength respectively but also in multiplexing more than two optical signals and monitoring transmission status of the optical signal having a particular wavelength.

Until now, a diffraction grating type filter, a Fabry-Perot etalon type filter, an optical interference type filter, an acousto-optic type filter, and so on have been proposed as a wavelength tunable optical filter. In these filters, while the principle of operation differs depending on a type of the filter, a wavelength tunable speed is limited to 0.1 to 1.0 msec fundamentally, since these filters can change a wavelength at any rate by changing the temperature, the angle to the incidence light, and the length of the portion through which light penetrates. Those filters based on a mechanical change are described by Staffan Greek, Ram Gupta, and Klas Hjort, "Mechanical Considerations in the Design of a Micromechanical Tuneable InP-Based WDM Filter", JOURNAL OF MICROELECTROMECHANICAL SYSTEMS (USA), 1999, Vol.8, No.3, and pp.328-334.

For this reason, the above technologies have a drawback in that they cannot realize an operating speed of 1 to 10 nsec required to perform an add/drop of an optical packet that is required in a next generation optical network.

On the other hand, a wavelength tunable optical filter using electro-optic effect of a dielectric crystal or a ferroelectric crystal is considered an effective means to eliminate the above drawback. However, the filter utilizing electro-optic effect requires a refractive index change of about 2 % in order to realize a wavelength tunable range of 30 nm for a light of 1500 nm wavelength because a wavelength tunable range is a function of a change in refractive index. In $LiNbO_3$ generally used as a crystal having electro-optic effect, a generation of an electric field of $3 \times 10^9$ V/m is required to realize about 2 % change in refraction, because $LiNbO_3$ has a maximum electro-optic constant $r_{33}$ of 31 pm/V. Since the electric field is not feasible, a material exerting a larger electro-optic effect has been expected.

In the light of the above circumstances, the present invention is directed to provide a wavelength tunable optical filter acquiring a sufficient wavelength tunable range while avoiding an increase of a voltage applied to a unit thickness of an electro-optic crystal. Namely, the objective of the present invention is to provide a wavelength tunable optical filter capable of changing a wavelength over a wide wavelength band with an application of low voltage.

Another objective of the present invention is to provide a wavelength tunable optical filter having an improved operation speed.

Yet another objective of the present invention is to provide a wavelength tunable optical filter having a low capacitance by reducing an area of an electrode thereof.

Disclosure of Invention

In order to achieve the objective, a wavelength tunable optical filter according to a first aspect of a wavelength tunable optical filter according to the present invention comprises a dielectric crystal portion being optically transparent, formed of a dielectric crystal having a cubic system and exhibiting a quadratic electro-optic effect, a mirror portion constituting a Fabry-Perot etalon in cooperation with the dielectric crystal portion, and an electrode configured to apply a voltage to the dielectric crystal portion thereby to change a wavelength of light transmitting through the etalon on a basis of the electro-optic effect.

In order to achieve the objective, in a wavelength tunable optical filter according to a second aspect of the present invention, the electrode is optically transparent to incoming light and disposed so as to adjoin the dielectric crystal portion, and wherein the mirror portion is a dielectric multilayer mirror formed of a dielectric multilayer film and disposed so as to adjoin the electrode.

In order to achieve the objective, a wavelength tunable optical filter according to a third aspect of the present invention further comprises an additional one or more dielectric crystal portions and an additional one or more transparent electrodes. The dielectric crystal portions and the transparent electrodes are disposed alternatively with each other to form a multilayer body, and the dielectric multilayer mirror portion is formed so as to sandwich the body.

In order to achieve the objective, in a wavelength tunable optical filter according to a fourth aspect of the present invention, the electrode is a metal electrode formed of metal, disposed so as to adjoin the dielectric crystal portion, and serves as the mirror portion.

In order to achieve the objective, in a wavelength tunable optical filter according to a fifth aspect of the present invention further includes a metal film coated on the transparent electrode.

In order to achieve the objective, in a wavelength tunable optical filter according to a sixth aspect of the present invention, the electrode is formed exclusively on an area that the incoming light passes through.

In order to achieve the objective, in a wavelength tunable optical filter according to a seventh aspect of the present invention, the metal film is formed exclusively on an area that the incoming light passes through.

In order to achieve the objective, in a wavelength tunable optical filter according to an eighth aspect of the present invention, the electrode is formed so as to generate two electric fields that are perpendicular with each other and with a transmission direction of light.

In order to achieve the objective, a wavelength tunable optical filter according to a ninth aspect of the present invention further comprises an additional dielectric crystal portion or more. The electrode is formed so as to generate two electric fields in two directions that are perpendicular with each other and with a transmission direction of light.

In order to achieve the objective, in a wavelength tunable optical filter according to a tenth aspect of the present invention, each of the dielectric crystal portions has a different FSR.

In order to achieve the objective, a wavelength tunable optical filter according to an eleventh aspect of the present invention further comprises an insulating layer formed of an insulating material having an electric permittivity smaller than that of the dielectric crystal portion. The insulating layer being interposed so as to divide the dielectric crystal portion into a first portion in which an electric field is generated in one of the two directions and a second portion in which an electric field is generated in the other of the two directions.

In order to achieve the objective, in a wavelength tunable optical filter according to a twelfth aspect of the present invention, wherein the insulating material comprises any one of $TeO_2$-rich glass, $SiO_2$, $Al_2O_3$ and polymer, or any complex thereof.

In order to achieve the objective, a wavelength tunable optical filter according to a thirteenth aspect of the present invention further includes a temperature controller configured to control a temperature of a dielectric crystal constituting the dielectric crystal portion.

In order to achieve the objective, in a wavelength tunable optical filter according to a fourteenth aspect of the present invention, a dielectric crystal constituting the dielectric crystal portion is single crystalline and an axis direction of one of crystal axes is in agreement with a transmission direction of light transmitting through the dielectric crystal portion.

In order to achieve the objective, in a wavelength tunable optical filter according to a fifteenth aspect of the present invention, a dielectric crystal constituting the dielectric crystal is poly crystalline and at least one of axis directions of crystal axes is in agreement with the transmission direction of light transmitting through the dielectric crystal portion.

In order to achieve the objective, in a wavelength tunable optical filter according to a sixteenth aspect of the present invention, the dielectric crystal has a composition of $K_{1-y}Li_yTa_{1-x}Nb_xO_3$.

In order to achieve the objective, in a wavelength tunable optical filter according to a seventeenth aspect of the present invention, the dielectric crystal has a composition obtained by substituting all of K in $KTa_{1-x}Nb_xO_3$ or by substituting all of K and Li in $K_{1-y}Li_yTa_{1-x}Nb_xO_3$ with at least one of Pb and La and all of Ta and Nb in $K_{1-y}Li_yTa_{1-x}Nb_xO_3$ with Ti.

In order to achieve the objective, in a wavelength tunable optical filter according to an eighteenth aspect of the present invention, the dielectric crystal has a composition obtained by substituting all of K in $KTa_{1-x}Nb_xO_3$, or by substituting all of K and Li in $K_{1-y}Li_yTa_{1-x}Nb_xO_3$ with at least one of Ba, Sr and Ca and all of Ta and Nb in $K_{1-y}Li_yTa_{1-x}Nb_xO_3$ with either one of Ti and Zr.

In order to achieve the objective, a wavelength tunable optical filter according to a nineteenth aspect of the present invention, the x as a first composition ratio is 0.1 or greater and 0.5 or smaller, and wherein the y as a second composition ratio is greater than 0 and 0.1 or smaller.

In order to achieve the objective, a wavelength tunable optical filter according to a twentieth aspect of the present invention, each of the wavelength tunable optical filters is arranged along a transmission direction of light incident thereon.

In order to achieve the objective, a wavelength tunable optical filter according to a twentieth aspect of the present invention, a face perpendicular to the transmission direction of the light is inclined at an angle of 2 degrees with a face perpendicular to a crystal axis of the dielectric crystal constituting the dielectric crystal portion included each of the wavelength tunable optical filter.

According to the present invention, since the dielectric crystal having a cubic system and exhibiting a quadratic electro-optic effect is used, there is provided a wavelength tunable optical filter that is capable of operating at high-speed on application of a low voltage, which has long been unobtainable.

In addition, since the wavelength tunable optical filter according to the present invention is able to operate at high speed in a wide range of wavelength, the filter can be used for an add/drop of a packet and also as a high-speed wavelength sweeper for use in optical measurements.

Moreover, according to a wavelength tunable optical filter of the present invention, by using two or more Fabry-Perot etalon type filters having a respectively different FSR, a voltage to be applied per unit thickness of the crystal is reduced and therefore an operation under moderate conditions is realized.

Furthermore, according to the present invention, by reducing an area of the electrode, capacitance of the filter can be reduced. In addition, by using metal having a low volume resistivity for the electrode, an operation at an order of 10 nsec can be realized.

Brief Description of Drawings

FIG. 1 is a schematic view of a wavelength tunable optical filter according to a first embodiment of the present invention.

FIG. 2 is a schematic view of a wavelength tunable optical filter module equipped with the wavelength tunable optical filter shown in FIG. 1.

FIG. 3 is a schematic view of a measurement system including the wavelength tunable optical filter module shown in FIG. 2.

FIG. 4 illustrates a transmission spectrum of the wavelength tunable optical filter shown in FIG. 1.

FIG. 5 illustrates a 3dB passband of the wavelength tunable optical filter shown in FIG. 1.

FIG. 6 illustrates a wavelength tunable characteristic of the wavelength tunable optical filter shown in FIG. 1.

FIG. 7 illustrates a high-speed response characteristic of the wavelength tunable optical filter shown if FIG. 1.

FIG. 8 is a schematic view of a wavelength tunable optical filter according to a second embodiment.

FIG. 9 illustrates a transmission spectrum of the wavelength tunable optical filter shown in FIG. 8.

FIG. 10 is a schematic view of a wavelength tunable optical filter according to a third embodiment of the present invention.

FIG. 11 is a wavelength tunable optical filter according to a sixth embodiment of the present invention.

FIG. 12 is a schematic view of a wavelength tunable optical filter module equipped with the wavelength tunable optical filter shown in FIG. 11.

FIG. 13 is a schematic view of a measurement system including the wavelength tunable optical filter module shown in FIG. 12.

FIG. 14 illustrates a transmission spectrum of the wavelength tunable optical filter shown in FIG. 11.

FIG. 15 illustrates a 3dB passband of the wavelength tunable optical filter shown in FIG. 11.

FIG. 16 illustrates a wavelength tunable characteristic of the wavelength tunable optical filter shown in FIG. 11.

FIG. 17 illustrates a high-speed response characteristic of the wavelength tunable optical filter shown in FIG. 11.

FIG. 18A is a schematic view of a wavelength tunable optical filter according to a seventh embodiment of the present invention.

FIG. 18B is a plane view of an upper electrode of the wavelength tunable optical filter shown in FIG. 18A.

FIG. 18C is a plane view of a lower electrode of the wavelength tunable optical filter shown in FIG. 18A.

FIG. 19 illustrates a wavelength tunable characteristic of the wavelength tunable optical filter shown in FIG. 18A.

FIG. 20 is a schematic view of a wavelength tunable optical filter according to an eighth embodiment of the present invention.

FIG. 21 illustrates a transmission spectrum of the wavelength tunable optical filter shown in FIG. 20.

FIG. 22 is a schematic view of a wavelength tunable optical filter that constitutes a multi-stage wavelength tunable optical filter according to an eleventh to a thirteenth embodiment.

FIG. 23 is a schematic view of a two-stage wavelength tunable optical filter according to an eleventh embodiment of the present invention.

FIG. 24 is a schematic view of a three-stage wavelength tunable optical filter according to a twelfth embodiment of the present invention.

FIG. 25 is a schematic view of a four-stage wavelength tunable optical filter according to a thirteenth embodiment of the present invention.

FIG. 26 is a schematic view of a two-stage wavelength tunable optical filter according to a fourteenth embodiment of the present invention.

FIG. 27 is a perspective view of a wavelength tunable optical filter according to a fifteenth embodiment of the present invention.

FIG. 28 is a plane view of a wavelength tunable optical filter according to a fifteenth embodiment of the present invention.

FIG. 29 is a schematic view of a wavelength tunable optical filter according to a fifteenth embodiment of the present invention.

FIG. 30 is a schematic view of a two-stage wavelength tunable optical filter according to a sixteenth embodiment of the present invention.

Best Mode for Carrying Out the Invention

Referring to accompanying drawings, preferred embodiments according to the present invention will be described in detail. In all the drawings for explaining the embodiments, like numerals are assigned to like components so as to eliminate a repetition of the explanation on them.

(A first to fifth embodiment)

Prior to an explanation of a first to a fifth embodiment, a basic principle underlying these embodiments will be explained.

The first to the fifth embodiments are characterized in that a Fabry-Perot type etalon filter configured with a crystalline material having a composition of $K_{1-y}Li_yTa_{1-x}Nb_xO_3$ (KLTN) is used.

KLTN changes its crystal system from tetragonal to cubic with an increase of temperature and demonstrates a large quadratic electro-optic effect when KLTN is in the cubic system. Particularly, in a temperature range close to the phase transition temperature from tetragonal to cubic, a relative electric permittivity increases significantly, thereby demonstrating an extremely large quadratic electro-optic effect proportional to the square of relative electric permittivity.

This phenomenon occurs even in $KTa_{1-x}Nb_xO_3$ (KTN). However, a large electro-optic effect is difficult to obtain because a phase transition takes place before the relative electric permittivity reaches a sufficiently high value since KTN undergoes a first-order phase transition. Moreover, since KTN shows a hysteresis accompanied by latent heat, there is a difficulty in controlling temperature. Namely, in case of a phase transition accompanied by latent heat, when the operation temperature falls to or below the phase transition temperature, the crystal configuration changes from cubic to tetragonal but does not change back to cubic even when the temperature rises to the original operation temperature, which is a so-called hysteresis.

In addition to such hysteresis, there is a drawback in that a material having a first-order phase transition may crack with a repetition of phase transitions. Therefore, when such a material is used, the temperature of the material needs to be strictly controlled. While the operation temperature should preferably be as close as possible to phase transition temperature theoretically, the material is kept practically at a temperature higher than the phase transition temperature by 3 to 10 degrees Celsius.

The reason why the material is kept at such a temperature is explained by a temperature overshoot of 1 to 2 degrees Celsius that takes place in a Peltier device, as well as a temperature fluctuation of +/- 0.1 degrees Celsius by the device. While the operation temperature has to be far from the phase transition temperature in order to circumvent an effect of temperature fluctuation, if the operation temperature is far from the phase temperature by 3 and 10 degrees Celsius, the electro-optic effect falls down to one-ninth and one hundredth level, respectively, because the efficacy of the electro-optic effect decreases proportional to $(1/(T-Tc)^2)$, where T is the operation temperature and Tc is the phase transition temperature. Therefore, such a phenomenon observed in a crystalline material having a first-order phase transition can be problematic in practical use. This is why a material having a second-order phase transition free from latent heat and hysteresis needs to be used in order to maintain a temperature as close as possible to the phase transition temperature.

Therefore, in the first to the fifth embodiment, KLTN having part of K replaced with Li is used. KLTN demonstrates substantially second-order reversible phase transition and has a larger relative electric permittivity, thereby providing a significant, practical improvement that facilitates temperature control.

Specifically, an initial temperature overshoot in a Peltier device or the like has not to be considered, leaving only a consideration of temperature fluctuation of +/- 0.1 degrees Celsius in the device. Therefore, the operation temperature away from the phase transition temperature by about 0.2 degrees Celsius leads to a stable operation, making it possible to reduce a decrease in electro-optic effect to negligible level.

As a result, it becomes possible to realize an efficient operation and a refractive index change required to assuredly maintain a wide wavelength tunable range at relatively low voltage.

Besides, while an operation temperature of an optical device utilizing a quadratic electro-optic effect should be close to the phase transition temperature from tetragonal to cubic, a temperature of the phase transition from paraelectric to ferroelectric (from cubic to tetragonal, in terms of crystal system) can be varied from absolute zero temperature to 400 degrees Celsius by changing a composition ratio of Ta and Nb in a KLTN crystal.

Therefore, there is an advantage of easily setting an operation temperature of the wavelength tunable optical filter fabricated using the material at around room temperature. In addition, such a wavelength tunable optical filter is used under the conditions in which the crystal assumes a cubic system. Furthermore, the wavelength tunable optical filter has an advantage of polarization independent operation.

Moreover, in case of the Fabry-Perot etalon filter having the electro-optic effect, a wavelength tunable range depends on the refractive-index change by the electro-optic effect of the material. That is, in order to realize a large wavelength tunable range on low voltage, it is indispensable to use the crystal material that has a large electro-optic effect. In this case, quadratic electro-optic crystals including KTN can realize a sufficiently large refractive-index change compared with the crystal generally known as an electro-optic crystal, such as $LiNbO_3$, which has the large electro-optic effect as mentioned above at close to a phase transition temperature, and has the linear electro-optic effects. Therefore, an optical filter having a wavelength tunable range wider than that of an optical filter fabricated using the conventional electro-optic crystal can be produced.

However, when a wavelength tunable optical filter having a still larger wavelength tunable range is required, it is desirable that a filter is constituted in many stages, since a variable band realizable by only one filter is limited to about 50 nm in a telecom window. However, the spacing between dielectric multilayer mirrors must be the integral multiple of half-wavelength, and determines an FSR of the light passing therethrough. If filters having different FSRs are combined, a wavelength tunable optical filter having a wide wavelength tunable range can be realized while keeping small a wavelength variable width by one filter.

Furthermore, since the wavelength tunable range of the optical filter according to the first to fifth embodiment is determined by electric field produced within the dielectric crystal of the filter, the voltage applied across the crystal concerned depends on the thickness of the crystal used for the filter. If a narrow wavelength variable width needs to be obtained, the FSR needs to be small and consequently a thickness of the crystal will become thick. This requires a large applied voltage even if the electric field required is small, leading to a higher applied voltage and thereby an increased load of a power supply.

On the other hand, an applied total voltage can be reduced by arranging dielectric crystal portions and transparent electrodes alternatively, under the condition that the total thickness becomes equal to a value required to obtain a desired FSR. That is, in two dielectric crystal portions adjoining each other with one transparent electrode in-between, when a voltage is applied to transparent electrodes so as to produce two electric fields crossing over with each other, the voltage is reduced to the value obtained by dividing the above-mentioned necessary value by the number of dielectric crystal portions, compared with the wavelength tunable optical filter having one dielectric crystal portion.

Furthermore, since this wavelength tunable optical filter operates based on the electro-optic effect, the high-speed response of 1GHz or more is theoretically possible.

From the above, the wavelength tunable optical filter according to the first to fifth embodiment can realize a highly sophisticated features such as a high-speed operation, a low drive voltage, a polarization independent characteristic, and a wide wavelength tunable range, which conventional wavelength tunable optical filters have long failed to realize.

Next, each of the first to the fifth embodiment will be described in detail. The following embodiments are intended for purposes of illustration only and are not intended to limit the scope of the invention. Therefore, although those skilled in the art can adopt various kinds of modifications or alterations containing each of these elements or all elements, those are also included in the scope of this invention.

(A first embodiment)

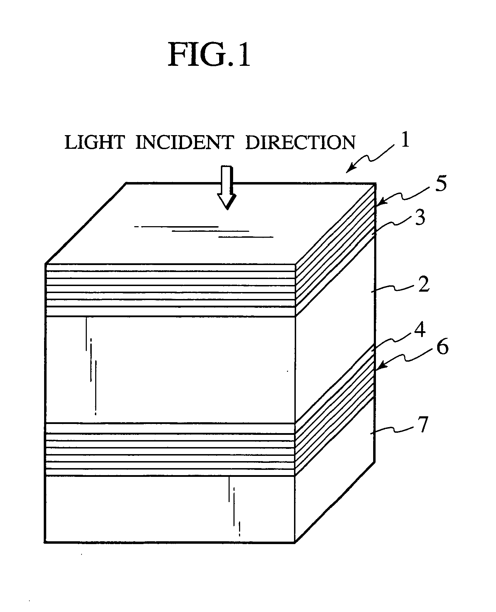

Figure 1 illustrates a schematic diagram of a wavelength tunable optical filter according to a first embodiment.

A dielectric crystal portion 2 of a wavelength tunable optical filter 1 according to this embodiment is formed of a KLTN crystal. Adjustment of the composition ratio of Li and Nb can change a phase transition temperature.

A composition of the KLTN crystal that forms the dielectric crystal portion 2 is $K_{0.97}Li_{0.03}Ta_{0.65}Nb_{0.35}O_3$, and its phase transition temperature was 19 degrees Celsius. Although Li composition is 0.03 in this embodiment, the second-order phase transition is obtained also for the composition of 0.001 and at a Li composition ratio of up to 0.1, the crystal can maintain a cubic system. Therefore, when a Li composition is kept in such a range, a practically suitable optical filter is obtained. Particularly, in a Li composition of 0.01-0.06, a high quality crystal is obtained and therefore high relative electric permittivity of 20,000 or more is realized.

For the phase transition temperature of 19 degrees Celsius, the operation temperature is 20 degrees Celsius, and the relative electric permittivity is 30,000.

In addition, a phase transition temperature can be set in a broader temperature range by setting the ratio of Nb and Ta. For example, when the composition ratio of Ta is 0.5, the phase transition temperature is 100 degrees Celsius, and when the ratio is 0.9, the temperature is -100 degrees Celsius. Therefore, in this composition range, a practicable filter is obtained with a use of a cooling/heating apparatus. Furthermore, the crystal having a phase transition of -20 to 80 degrees Celsius, which can be controlled by a Peltier device, is desirable, and the composition ratio of Ta is set to be 0.55-0.7 in this case. Moreover, it is desirable in order to save electric power of a Peltier device as much as possible when the phase transition temperature is set to be around room temperature. Particularly, in order to realize the phase transition temperature of 10-40 degrees Celsius, the composition ratio of Ta is set to be 0.6-0.67.

Since high efficiency is obtained when an operation temperature is as close as possible to the phase transition temperature as mention above, it is desirable to make the operation temperature in as close an agreement with the phase transition temperature as possible. If a temperature fluctuation of the Peltier device and a decrease in efficiency of the electro-optic effect are permitted to 1/100, the operation temperature is a temperature that satisfies 0.2 degrees Celsius < (T - Tc) <10 degrees Celsius (here, T is an operation temperature and Tc is the phase transition temperature).

Referring to FIG. 1, the wavelength tunable optical filter 1 according to this embodiment is formed on a glass substrate 7, and the dielectric crystal portion (KLTN crystal plate) 2 formed of a dielectric crystal is sandwiched by ITO (Indium-Tin Oxide) transparent electrodes 3, 4. Furthermore, the dielectric crystal portion 2 having the electrodes 3, 4 on both sides is again sandwiched by dielectric multilayer film mirrors 5 and 6 on the electrodes 3 and 4, respectively, resulting in a Fabry-Perot etalon configuration.

The dielectric multilayer film mirrors 5, 6 are formed of $SiO_2/Nb_2O_5$, which is a generally used material.

Assuming that the wavelength tunable optical filter 1 is used in a telecom window (C band) of 1530-1570 nm, the filter 1 is designed so that only the light having a wavelength of 1530 nm can penetrate therethrough. Moreover, in order to realize a 40 nm variable range, FSR of the filter 1 is also set as 40 nm. In this case, the thickness of KLTN is set to be about 13 micrometers. A passband is adjusted by the reflectance of the dielectric multilayer film mirrors 5, 6, and in this embodiment, the reflectance of the dielectric multilayer film mirrors 5, 6 is designed to be 90% at a wavelength of 1530 nm.

KLTN used in this embodiment has the quadratic electro-optic effect as mentioned above and a change in refractive index when electric field is applied is expressed as follows:

$$\Delta n = -1/2 \times n_0^3 \times \varepsilon_0^2 \times \varepsilon_r^2 \times g_{12} \times E^2 \qquad (1)$$

where $\Delta n$ is a change in refractive index; no is the refractive index before an application of electric field; $\varepsilon_0$ is the electric permittivity of vacuum; and $\varepsilon_r$ is a relative electric permittivity of the crystal; $g_{12}$ is a quadratic electro-optic constant; and E is an applied electric field. Additionally, an electro-optic constant of KLTN is $g_{12} = -0.038$ $m^4 / C^2$. Clearly seen from the equation (1), a change in refractive index is proportional to the 2nd power of electric field intensity.

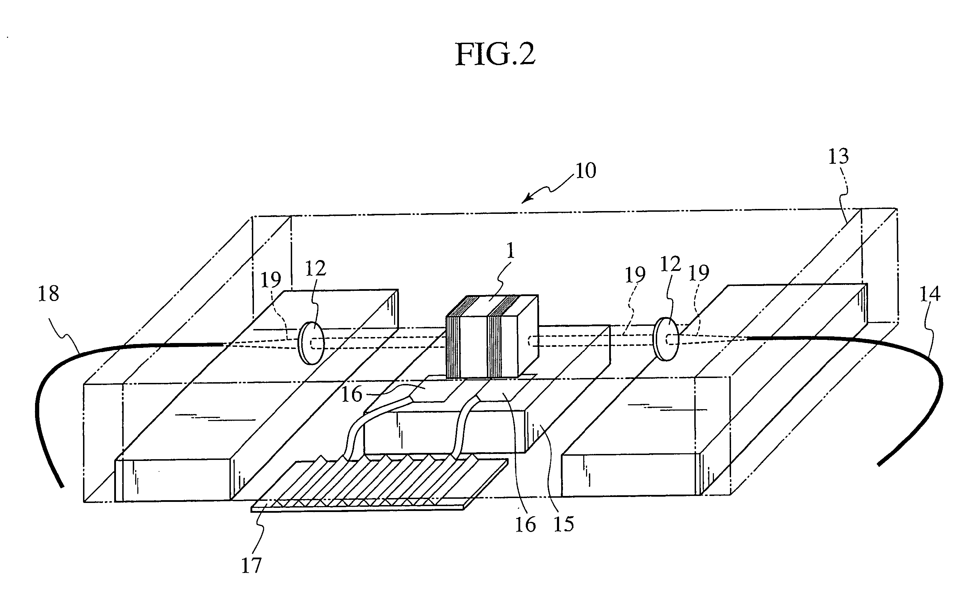

FIG. 2 is a schematic view of a wavelength tunable optical filter module 10 equipped with the wavelength tunable optical filter shown in FIG. 1.

The wavelength tunable optical filter 1 is secured with a solder on a substrate 15 on which the circuit pattern was formed. An electrode 16 is connected to a casing electrode 17 formed in a casing 13 by a wire bonder.

After light 19 exiting from an optical fiber 14 enters the wavelength tunable optical filter 1 through a collimator lens 12 and passes through the filter 1, the light 19 enters an optical fiber 18 through the collimator lens 12.

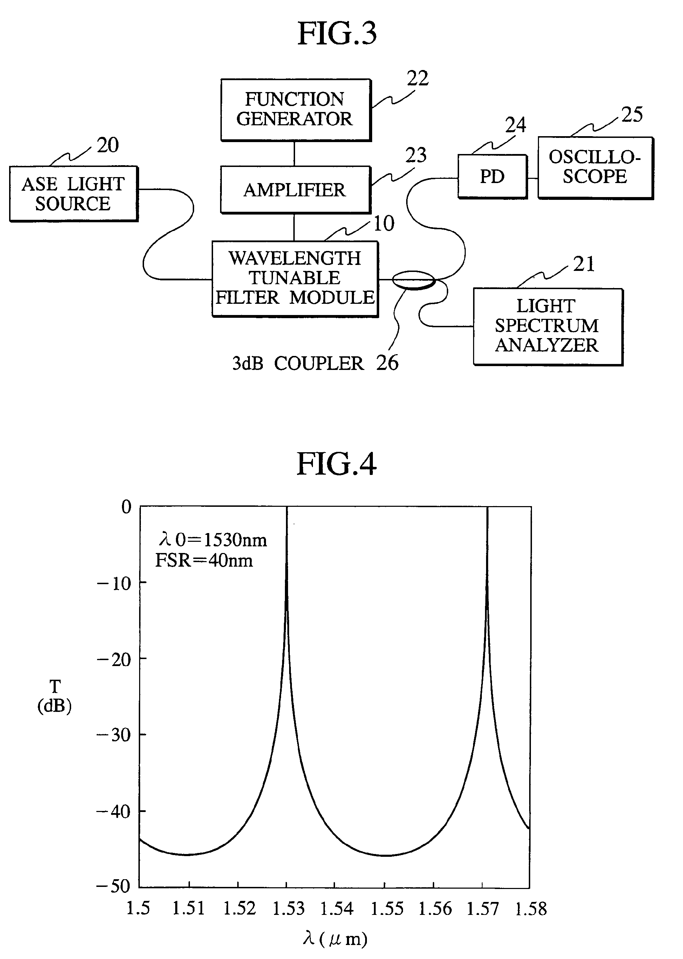

FIG. 3 is a schematic view of a measurement system including the wavelength tunable optical filter module 10 shown in FIG. 2.

In this measurement system, firstly, light emitted from an amplified spontaneous emission (ASE) (incoherent) light source 20 enters the wavelength tunable optical filter module 10, and the light that exits therefrom is detected by a spectrum analyzer 21.

When high-speed operation measurement is performed, the voltage generated from a function generator 22 is amplified with an amplifier 23 and the amplified voltage is applied to the wavelength tunable optical filter 1 (FIG. 2) in the wavelength tunable optical filter module 10. Then, the light that has passed through the filter 1 concerned is detected with an optical detector (Photo Detector: PD) 24 and a response characteristic is observed with an oscilloscope 25.

By the way, the dielectric crystal constituting the dielectric crystal portion 2 can be single crystalline or polycrystalline. In case of a single crystal, one of the crystal axes is disposed so as to coincide with a transmission direction of light. In case of a poly-crystal, at least one of the crystal axes is disposed so as to coincide with a transmission direction of light.

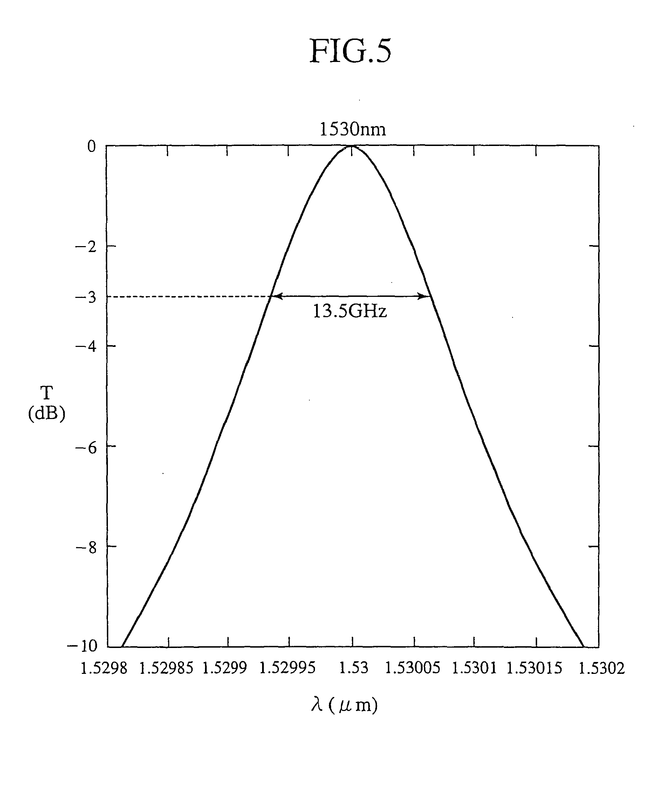

FIG. 4 illustrates a transmission spectrum of the wavelength tunable optical filter 1. FIG. 5 illustrates a passband of the wavelength tunable optical filter 1.

The center wavelength of the passband is 1530 nm as designed, and FSR is apparently 40 nm as shown in FIG. 4. In addition, in this embodiment, the transmission spectrum width defined by 3 dB with the 3dB coupler is 13.5 GHz, as shown in FIG. 5. Also, an extinction ratio of -40 dB with respect to the stopband is obtained.

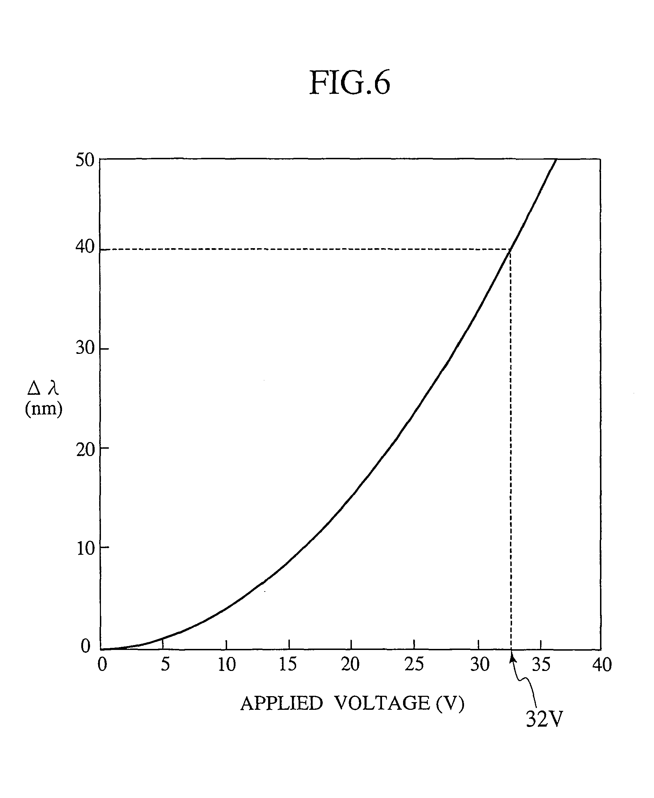

FIG. 6 illustrates a wavelength tunable characteristic of the wavelength tunable optical filter 1 shown in FIG. 1. As shown, in the wavelength tunable optical filter 1, a wavelength shift of 40 nm is realized by application of a voltage of 32V.

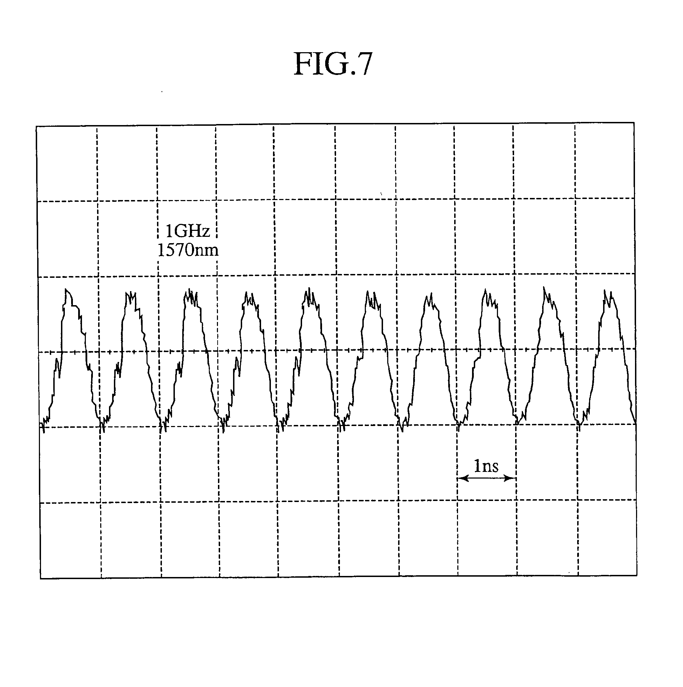

Next, a high-speed response characteristic of the wavelength tunable optical filter 1 will be explained. The high-speed response characteristic is measured as follow. Firstly, after the wavelength tunable optical filter 1 is disposed in an optical collimate system constituted by 2 lenses, an optical fiber is mounted so as to be optically connected. A metal wiring pulled out from the transparent electrode is connected to the casing with a gold wire, to finish the module 10 shown in FIG. 2. The light from the ASE light source 20 is introduced into an optical fiber 14 (FIG. 2). Next, the light that exits from the optical fiber 14 and then passes through the wavelength tunable optical filter 1 (the center transmission wavelength 1570 nm) is detected with the photodetector 24. Here, a rectangular voltage at 1 GHz from the pulse pattern generator 22 is amplified with an amplifier up to 32V and the repetition voltage of 32V at 1 GHz is applied to electrodes 3,4 (FIG. 1) of the wavelength tunable optical filter 1. Finally, a wavelength change of the light exiting from the wavelength tunable optical filter 1 has been observed. The observed signal is shown in FIG. 7. From FIG. 7, it is understood that the light exiting from the wavelength tunable optical filter 1 responses to the applied voltage and a wavelength shift of 40 nm is achieved at 1 GHz.

Thus, according to the wavelength tunable optical filter 1 in this embodiment, it is apparent that a 40 nm wavelength change is realized and the high-speed response that enables an add/drop of a packet can be realized by application of a voltage of about 30V.

(A second embodiment)

A second embodiment exemplifies a wavelength tunable optical filter similar to that in the first embodiment, except in that the wavelength tunable optical filter concerned has two Fabry-Perot etalon type filters.

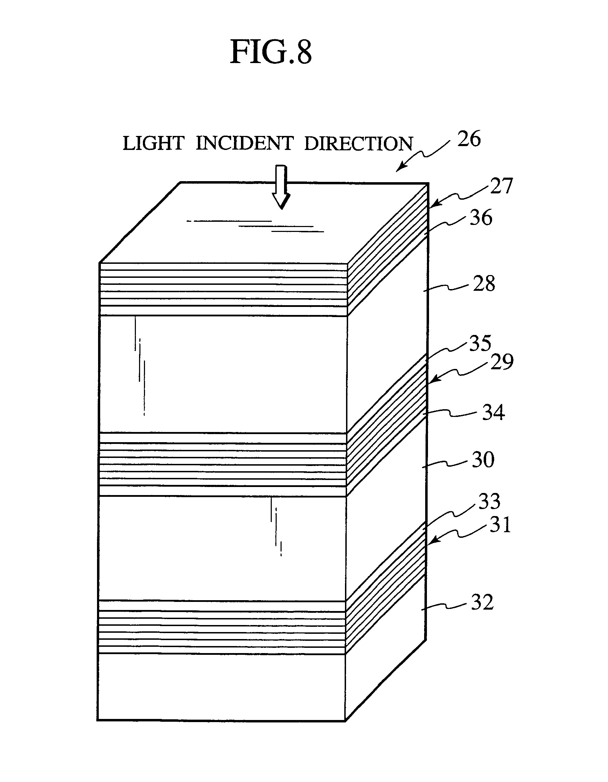

Referring to FIG. 8, a wavelength tunable optical filter 26 is constructed by stacking a dielectric multilayer mirror 31, a transparent electrode 33, a dielectric crystal portion 30, a transparent electrode 34, a dielectric multilayer mirror 29, a transparent electrode 35, a dielectric crystal portion 28, a transparent electrode 36, and a multilayer mirror 29 in this order on a glass substrate 32. In other words, the wavelength tunable optical filter 26 has two dielectric crystal portions 28, 30 and four (two pairs of) electrodes. Besides, the filter 26 is practically composed of two etalon-type filters arranged in series with each other (along the direction of the light transmission) with the dielectric multilayer mirror 29 in-between. While both of the two etalon-type filters have the same center wavelength of 1530 nm at the time of no voltage applied, one is designed to have an FSR of 10 nm, the other is designed to have an FSR of 8 nm.

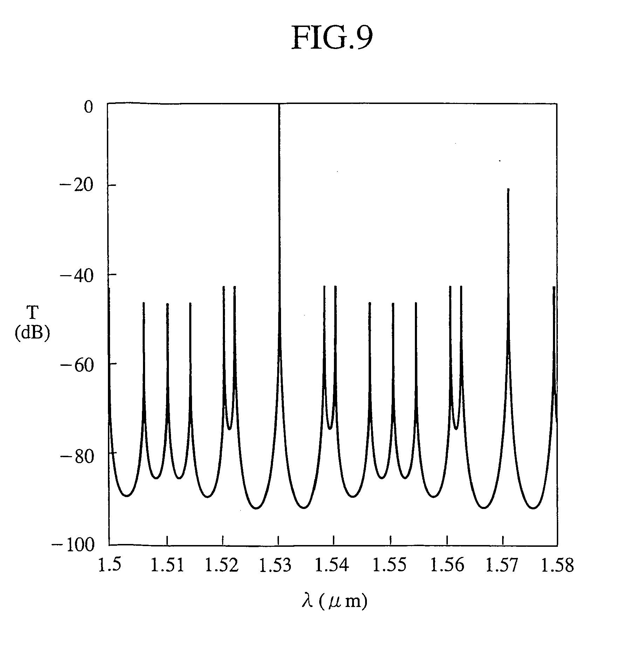

FIG. 9 illustrates a transmission spectrum of the wavelength tunable optical filter 26. As illustrated in FIG. 9, it is understood that an extinction ratio of -40dB at a stopband in a wavelength range from 1530 nm to 1570 nm has been realized. This is because an overlapping peak of transmission spectrum of the filter having an FSR of 10 nm and the filter having an FSR of 8 nm can exist only at intervals of the least common multiple of these FSRs. In this case, since the least common multiple is 40 nm, there exists a single transmission peak in the passband used.

With the above construction, a wavelength tunable optical filter having an FSR (or wavelength tunable width) narrower than a desired wavelength tunable range and a wide wavelength tunable range are obtained. In addition, a wide tunable range is realized by setting a wavelength tunable range of each wavelength tunable optical filter as an FSR thereof. In the above case, the wavelength tunable optical filter having an FSR of 10 nm has a transmission peak at 1530 nm, 1540 nm, 1550 nm, 1560 nm, and 1570 nm and the wavelength tunable optical filter having an FSR of 8 nm has a transmission peak at 1530, 1538 nm, 1546 nm, 1554 nm, 1562 nm, and 1570 nm.

When setting a transmission peak of 1555 nm, for example, the transmission peak of the wavelength tunable optical fiber having an FSR of 10 nm needs to be shifted by 5 nm (from 1550 nm to 1555 nm) and the transmission peak of the wavelength tunable optical fiber having an FSR of 8 nm needs to be shifted by 1 nm (from 1554 nm to 1555 nm). A transmission wavelength of such a Fabry-Perot etalon type optical filter is expressed as follow:

$$\lambda = C \ / \ (m \ \times \ \Delta \upsilon) \qquad (2)$$

where C is the velocity of light, m is an integer, and $\Delta\upsilon$ is an FSR required.

Also, $\Delta\upsilon$ is expressed as follows:

$$\Delta \upsilon = C / (2 \ n \ l) \qquad (3)$$

where n is a refractive index and l is a thickness of the crystal.

According to the equation (3), a wavelength tunable optical filter having a desired FSR is designed by changing a thickness of the crystal used thereof. Also from the above equation, it is possible to determine that the transmission peak corresponding to m-th order is used for a desired wavelength.

As stated above, according to the second embodiment, it is found that a wide wavelength tunable range is realized by combining two wavelength tunable optical filters having a respectively different FSR. In addition, it is confirmed that since each wavelength tunable optical filter has as high a response speed of 0.5 nsec as the wavelength tunable optical filter 1, the wavelength tunable optical filter 26 has a response speed as close as the speed.

However, since the thickness of KLTN crystal increases accordingly with a reduction of an FSR, a voltage applied to the crystal comes to be higher although a wavelength tunable width is kept small. For example, an application voltage is estimated to be 65V in order to realize a wavelength tunable width of 10 nm with a filter having an FSR of 10 nm.

By the way, a 3dB passband of a wavelength tunable optical filter can be easily designed with a reflectance of the dielectric multilayer mirrors. For example, when the reflectance is 99%, a wavelength tunable optical filter having 2GHz passband is obtained.

While in the second embodiment a glass substrate is used, any substrate can be used without placing an adverse effect on a filter characteristic, if a material of the substrate is transparent in a transmission wavelength range intended.

(A third embodiment)

In a third embodiment, a wavelength tunable optical filter having the same FSR as the filters in the second embodiment is configured by stacking a KLTN crystal and ITO electrodes. When an FSR is 10 nm, a thickness of the KLTN crystal is about 55 micrometers, which corresponds to half the wavelength multiplied by 200. This thickness is divided by 5 and on each of them is deposited the ITO film having a thickness of half the wavelength.

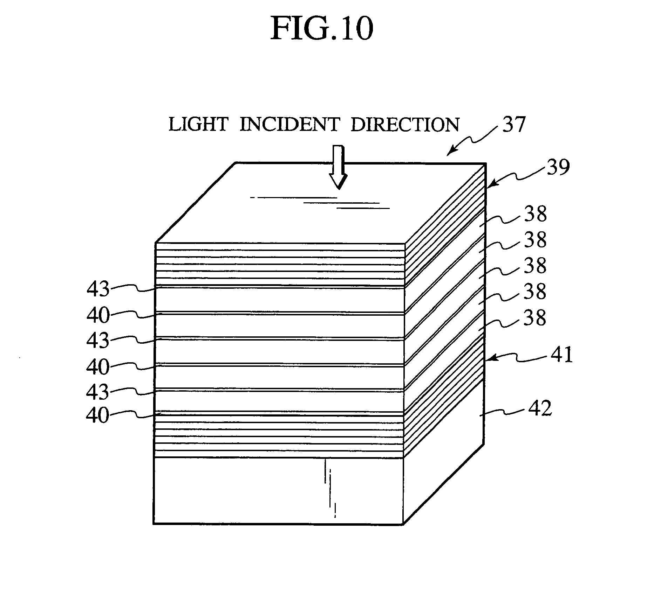

FIG. 10 is a schematic view of a wavelength tunable optical filter 37 according to the third embodiment of the present invention. As shown in FIG. 10, a multilayer body is formed on a glass substrate 42, the body having three transparent electrodes 40 (positive), three transparent electrodes 43 (negative), and five dielectric crystal portions 38 and being sandwiched by dielectric multilayer mirrors 39, 41.

In addition, a voltage is applied across the transparent electrodes 40, 43 so that each transparent electrode 40 is kept positive. By such an application of voltage, electric field is generated in two dielectric crystal portions 38 neighboring via an electrode so that the direction of the electric field in each dielectric crystal portion 38 is different from one another. In this case, the electro-optic effect is proportional to the second power of the intensity of electric field and the refractive index is independent of the direction of the electric field. Therefore, the wavelength tunable optical filter having such an electrode configuration works effectively. In case of the wavelength tunable optical filter using KLTN, a wavelength tunable width depends on not an FSR but an electric field. The voltage is expressed as follows:

$$V = E \times d/m \qquad (4)$$

where V is an applied voltage, E is the electric field intensity required to realize a desired wavelength shift, d is a thickness of the KLTN crystal used, and m is the number of the KLTN crystal portions 38 divided.

Clearly from the equation (4), the applied voltage reduces reverse proportional to the number of KLTN crystal portions. Therefore, while the voltage required to shift the wavelength of 10 nm in the wavelength tunable optical filter having one dielectric crystal portion with an FSR of 10 nm is 65V as explained in the second embodiment, the voltage can be reduced to 13V when the dielectric crystal portion is divided into five portions. Similarly, while the applied voltage is 72V in the wavelength tunable optical filter having an FSR of 8 nm as illustrated in the second embodiment, the voltage can be reduced to 14.4V when the dielectric crystal portion is divided into five portions. Using this method to increase the number of layers stacked, it is found that the applied voltage can be reduced even to 10V or below.

By the way, three or more electrodes and five or more dielectric crystal portions can be provided. That is, the number of layers stacked is optionally changeable.

(A fourth embodiment)

A fourth embodiment exemplifies a wavelength tunable optical filter having a configuration similar to that in the first embodiment, except in that the KLTN crystal is replaced with a $BaTiO_3$ crystal.

The wavelength tunable optical filter in this embodiment realizes a wavelength shift of 40 nm by a driving voltage of as low as 45V, although the filter requires a rather high operation temperature at 110 degrees Celsius since the phase transition temperature is 109 degrees Celsius. The wavelength tunable optical filter has about the same response speed as the optical filter illustrated in the first embodiment. That is, the optical filter of this embodiment is verified to response to a frequency of 1GHz. By the wavelength tunable optical filter fabricated using the dielectric crystal to have the same configuration as the aforementioned wavelength tunable optical filters 26, 37, a substantially the same operation characteristics as that described in the second and the third embodiment can be realized.

(A fifth embodiment)

A fifth embodiment exemplifies a wavelength tunable optical filter using $Ba_{0.73}Sr_{0.27}TiO_3$ instead of $BaTiO_3$ used in the optical filter in the fourth embodiment. By the way, the only difference between the wavelength tunable optical filters according to the fifth embodiment and according to the fourth embodiment lies in the above respect.

In this case, the phase transition temperature is 9 degrees Celsius and the operation temperature is 10 degrees Celsius. By replacing part of Ba with Sr, the operation temperature is set to be around room temperature. Other characteristics are nearly the same as those of the optical filter in the fourth embodiment. Also, it is found that a wavelength tunable optical filter having the same wavelength tunable width as those in the preceding embodiments is obtained when PLZT (optical transparent ceramics) is used.

As stated above, since a crystal having a quadratic electro-optic effect is used in the first to the fifth embodiment, the wavelength tunable optical filter exhibits characteristics of high speed, low driving voltage and high wavelength shift speed that have not been realized in the past. In addition, since the wavelength tunable optical filter according to the first to the fifth embodiment is able to operate at high speed in a wide range of wavelength, the filter can be used for an add/drop of a packet and also as a high-speed wavelength sweeper for use in optical measurements.

(A sixth to a tenth embodiment)

Next, a sixth to a tenth embodiment will be described. Before describing each embodiment, a basic principle underlying these embodiments will be explained.

Even in the sixth to the tenth embodiment, a Fabry-Perot etalon type filter having a dielectric crystal portion formed of a KLTN crystal is used as is the case with the first to the third embodiments.

As already explained, by using a crystal such as KLTN having a larger electro-optic effect than LiNbO3, the voltage required to realize a wavelength shift intended can be greatly reduced. According to the evaluation results by the inventors of the present invention, the intensity of electric field can be reduced to one thousands level in a wavelength tunable optical filter using the KLTN crystal, compared with an optical filter using $LiNbO_3$. However, since the optical field intensity required is still about 2,500kV/m, a further reduction in the applied voltage may be preferable in some applications. The sixth to the tenth embodiment exemplifies a wavelength tunable optical filter that is capable of reducing the applied voltage.

When a wavelength tunable optical filter is formed such that the dielectric crystal portion formed from a crystal having a quadratic electro-optic effect is sandwiched by transparent electrodes and then dielectric multilayer mirrors, the direction of the light transmitting through the dielectric crystal portion is the same as the direction of the electric field (external electric field) produced in the dielectric crystal portion by voltage application. For this reason, the direction of the electric field of light and the direction of the external electric field intersect perpendicularly with each other. By the way, a KLTN crystal has an anisotropy in refractive index in which electro-optic constants are $0.038m^4/C^2$ (absolute value) in the direction perpendicular to an external electric field and $0.136m^4/C^2$ (absolute value) in the direction parallel to an external electric field. Therefore, the direction that exhibits a small change in refractive index is used.

In this direction, since a refractive-index change in the direction perpendicular to an electric field is isotropic, there exits an advantage in that the wavelength tunable optical filter becomes less dependent on the polarization. Therefore, this configuration is desirable when a wavelength tunable range is relatively narrow (5 nm or less) and the low-speed, for example in an order of msec, is required. However, when a still broader wavelength tunable range is required, since a high voltage needs to be applied, it is desirable to use the direction of a larger electro-optic constant.

However, when using the direction of a larger electro-optic constant, there are the following problems. When applying an electric field in the direction intersecting perpendicularly with a transmission direction of light, the refractive index of the direction parallel to the direction of the electric field generated by voltage application will be about 3.8 times the refractive index in the perpendicular direction, because of the anisotropy in refractive index.

Furthermore, a refractive index increases in the perpendicular direction with an increase in the electric field intensity, while the index in the direction parallel to the electric field decreases with an increase in the electric-field intensity. Therefore, the wavelength tunable optical filter that depends on polarization can only be realized in this case.

As a means to overcome this problem, in the sixth to the tenth embodiment, there is proposed a wavelength tunable optical filter having a configuration capable of generating two electric fields that are both perpendicular to a transmission direction of light and parallel with each other in the dielectric crystal portion. According to this configuration, a superposition of refractive index changes in the direction parallel to and perpendicular to the electric field will serve as the total refractive index of the crystal. Since the index changes oppositely, the refractive index as the whole will be 0.136 - 0.038 = 0.098. Therefore, in addition to polarization independency, a refractive-index of about 2.6 times larger is realizable, compared with the wavelength tunable optical filter in which an electric field in a transmission direction of light (refractive-index change 0.038 $m^4/C^2$).

Furthermore, the wavelength tunable optical filter in which an electric field is applied in a transmission direction of light is somewhat disadvantageous. That is, since the thickness of a dielectric crystal portion (dielectric crystal) is determined by an FSR (Free Spectral Range: wavelength interval) required for the filter, when a wavelength tunable optical filter having a small FSR is needed, the crystal must be thicker and thereby relatively large voltage is required. However, in the wavelength tunable optical filter exemplified in the sixth to the tenth embodiment, the voltage to be applied is only dependent on the width of and independent on the thickness of the dielectric crystal portion because the voltage is applied perpendicular to the direction of a transmission direction of light. Therefore, even if the thickness of the dielectric crystal portion is changed according to an FSR to be intended, it becomes possible to adjust the application voltage independently.

By the way, when applying the electric field of such two orthogonal directions to the crystals, an electric field is generated in an undesired direction, in the regions close to both electrodes, and a problem of affecting the polarization characteristic may arise. For this reason, in the sixth to the tenth embodiment, a configuration in which a material having a small electric permittivity is interposed between the dielectric crystals is proposed. The wavelength tunable optical filter according to this invention also takes advantage of the larger electro-optic effect of the electro-optic crystal, and the larger electro-optic effect originates in the high electric permittivity of such a material. Since electric flux lines pass through the portion having a high electric permittivity, two electric fields intersecting orthogonally with each other are prevented from being influenced by inserting in-between the material having an electric permittivity smaller than that of the dielectric crystal that forms the dielectric crystal portions.

From the above arguments, there is realized a wavelength tunable optical filter with advanced features that is capable of operating on a low voltage and changing the wavelength in a wide wavelength band, as illustrated in the following embodiments.

Next, the sixth to the tenth embodiment will be explained in detail. The following embodiments are intended for purposes of explanation only and intended not to restrict the scope of the present invention. Therefore, although those skilled in the art can adopt various kinds of alterations or modifications containing each and every element, those alterations and the like also fall into the scope of the present invention.

(A sixth embodiment)

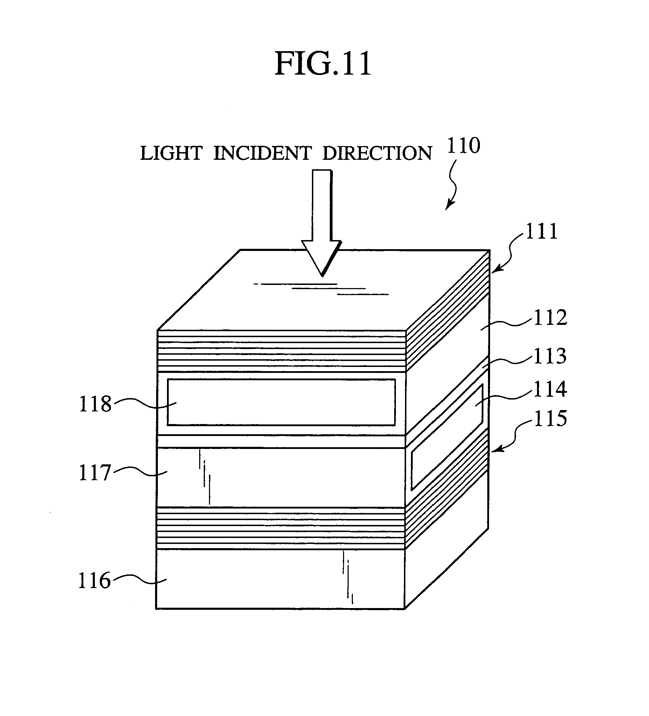

FIG. 11 is a schematic diagram of a wavelength tunable optical filter 110 according to a sixth embodiment of the present invention. As shown in FIG. 11, a wavelength tunable optical filter 110 is formed on a glass substrate 116 and has an insulating layer 113 formed between dielectric crystal portions (dielectric crystal plates) 112, 117. Furthermore, dielectric multilayer film mirrors 111, 115 are arranged on the outer side thereof. The above construction constitutes the Fabry-Perot etalon type filter.

Moreover, two electrodes 118 are formed on the side face of the dielectric crystal portion 112 so as to oppose with each other. Similarly, two electrodes 114 are formed on the side face of the dielectric crystal portion 117 so as to oppose with each other. The electrodes 114, 118 are formed of metal by vacuum evaporation.

The wavelength tunable optical filter 110 has four edges of 50 micrometers each, seen from the direction of the incident light, and thereby the spacing between two electrodes 114 (118) is also 50 micrometers.

The electrode 114 is formed so as to generate an electric field in a direction parallel to the page of FIG. 11 in the lower dielectric crystal portion 117. Similarly, the electrode 118 is formed so as to generate an electric field in a direction perpendicular to the page of FIG. 11. That is, two electric fields are generated respectively in the two directions that intersect perpendicularly with the direction of incident light (the transmission direction), and intersect perpendicularly mutually.

The dielectric crystal portions 112, 117 are formed of the KLTN crystal, and the composition thereof is $K_{0.97}Li_{0.03}Ta_{0.65}Nb_{0.35}O_3$. Although the composition ratio of Li is 0.03 in this embodiment, a Li composition ratio of even 0.001 can make the crystal exhibit a second-order phase transition. Also, at a Li composition ratio of up to 0.1, the crystal can maintain a cubic system, which is feasible for a practical use. Especially, a range of 0.01-0.06 in the composition ratio, a high quality crystal having an electric permittivity of 20,000 or more is realized.

An operation temperature of the wavelength tunable optical filter is 20 degrees Celsius and the relative electric permittivity of the dielectric crystal is 30,000 at 20 degrees Celsius. The phase transition temperature may be set over a broad range by changing the composition ratio of Nb and Ta. For example, when the composition ratio of Ta is 0.5, the phase transition temperature is 100 degrees Celsius, and when the ratio is 0.9, the phase transition temperature is -100 degrees Celsius. Therefore, if the composition ratio of Ta is in this range, a feasible filter is obtained with the aid of a cooling/heating apparatus.

The crystal having a phase transition temperature of -20 to 80 degrees Celsius that can be controlled with a Peltier device is more desirable, and in this case, the composition ratio of Ta has to be in a 0.55-0.7 range. Furthermore, in order to make power consumption of the Peltier device as small as possible, the phase transition temperature should be desirably around room temperature. When the phase transition temperature is set in a range of 10-40 degrees Celsius, the composition ratio of Ta has to be set to 0.6-0.67.

As mentioned above, since a smaller difference between the operation temperature and the phase transition temperature yields a higher efficiency of the wavelength tunable optical filter, it is desirable to make the two temperatures coincide as close as possible with each other. When a temperature fluctuation of the Peltier device and a reduction in efficiency of the electro-optic effect are permitted to 1 percent, the difference between the two temperatures can be in a range of 0.2 to 10 degrees Celsius (0.2 degrees Celsius <(T-Tc) < 10 degree Celsius, wherein T is an operation temperature and Tc is phase transition temperature).

The insulating layer 113 is formed of $TeO_2$ system glass. The reason why $TeO_2$ system glass is used is that a refractive index is almost identical to the KLTN crystal and a refractive index can be equal to that of KLTN by adjusting its composition, thereby reducing an optical reflection at the interface therebetween. The thickness of the insulating layer 113 is adjusted to $\lambda$(lambda)/2.

The dielectric multilayer film mirrors 111, 115 are formed of $SiO_2/Nb_2O_5$, which is a generally used material.

The wavelength tunable optical filter 110 is intended to be used in a telecom window of 1530-1570 nm (C band), and accordingly designed so as to have the center wavelength of 1570 nm when no electric field is produced. In addition, in order to realize a wavelength tunable range of 40 nm, FSR of the wavelength tunable optical filter is set to be 40 nm. In this case, the thickness of the dielectric crystal portions 112, 117 is set to be about 13 micrometers in total. Therefore, the dielectric crystal portions 112, 117 have a thickness of about 6.5 micrometers each. A passband is adjusted with the reflectance of the mirrors, and in this embodiment, the dielectric multilayer film mirrors 111, 115 are designed so as to have a reflectance of 90 % at 1570 nm.

The dielectric crystal portions 112, 117 (KLTN) used in this embodiment have the quadratic electro-optic effect as mentioned above. The amount of refractive-index change in each direction of the electric field in the configuration of FIG. 11 is expressed in the following equations (5) and (6):

$$\Delta n_{\perp} = -1/2 \times n_0{}^3 \times g_{12} \times \varepsilon_0{}^2 \times \varepsilon_r{}^2 \times E^2 \qquad (5)$$

$$\Delta n_{//} = -1/2 \times n_0{}^3 \times g_{11} \times \varepsilon_0{}^2 \times \varepsilon_r{}^2 \times E^2 \qquad (6)$$

where $\Delta n_{\perp}$ is a refractive-index change in a direction perpendicular to the direction of an electric field; $\Delta n_{//}$ is a refractive-index change in a direction parallel to the direction of an electric field; $n_0$ is a refractive index before an electric-field is applied; $\varepsilon_0$ is the electric permittivity of vacuum; $\varepsilon_r$ is a relative electric permittivity; $g_{11}$ and $g_{12}$ are quadratic electro-optic constants; and E is an applied electric field. By the way, $g_{11}$ and $g_{12}$ are equal to 0.136 $m^4/C^2$ and -0.038 $m^4/C^2$, respectively.

As apparent from the equations (5) and (6), the refractive index changes differently depending on the direction of an applied electric field. Therefore, the total amount of refractive index changes when two electric fields are generated in the direction perpendicular to a transmission direction of incident light is expressed from an addition of the equations (5) and (6) as follows:

$$\Delta n_1 = -1/2 \times n_0{}^3 \times (g_{11} + g_{12}) \times \varepsilon_0{}^2 \times \varepsilon_r{}^2 \times E^2 \qquad (7)$$

Therefore, a refractive index changes equally for 2 kinds of polarization that is orthogonal with a transmission direction of light, and therefore polarization independent operation is realized.

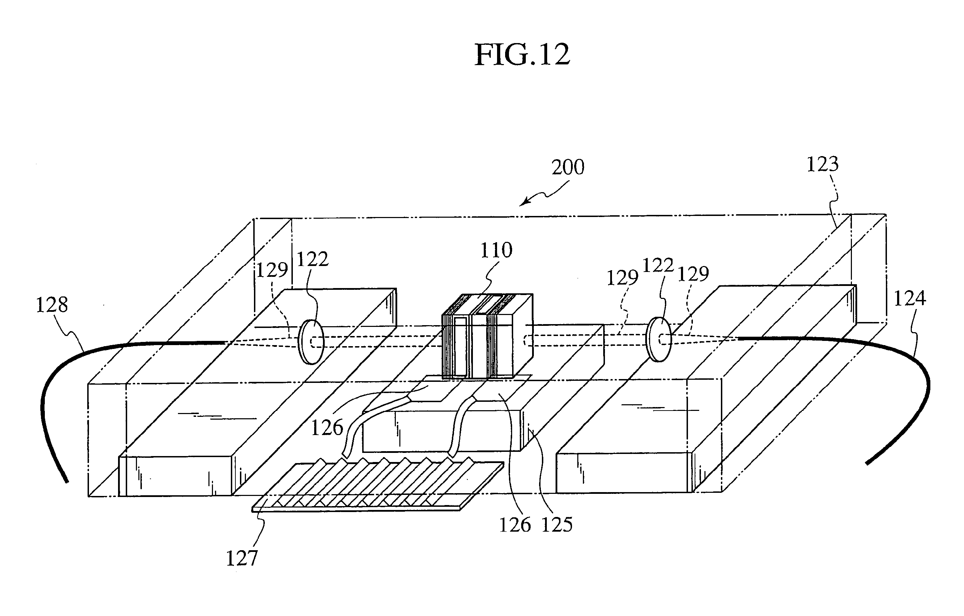

FIG. 12 is a schematic view of a wavelength tunable optical filter module equipped with the wavelength tunable optical filter 110 shown in FIG. 11.

The wavelength tunable optical filter 110 is secured on the substrate 125 with a solder, the substrate 125 having a wiring pattern. An electrode 126 is connected with a body electrode 127 by wire bonding, the casing electrode 127 being formed on a casing 123.

Light 129 exited from an optic fiber 124 enters the wavelength tunable optical filter 110 through a collimator lens 122 and then passes through the filter 110. Then, the light 129 enters the optical fiber 128 on the exit side through the collimator lens 122.

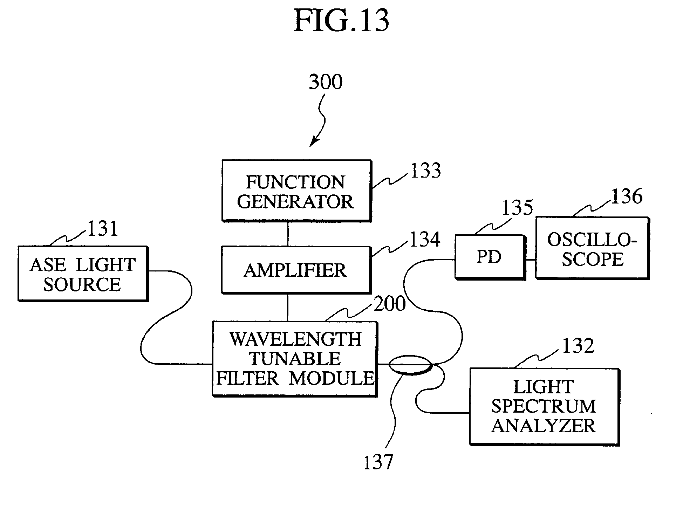

FIG. 13 is a schematic view of a measurement system 300 including a wavelength tunable optical filter module 200 in FIG. 12. In this measurement system, the light emitted from an ASE (incoherent) light source 131 enters the wavelength tunable optical filter module 200, and is then detected by an optical spectrum analyzer 132.

When carrying out a high-speed operation measurement, the voltage generated by a function generator 133 is amplified with an amplifier 134 and the amplified voltage is applied to the wavelength tunable optical filter 110 (FIG. 12) of the wavelength tunable optical filter module 200. Then, a photo detector (PD) 135 detects the light exiting from the filter 110 concerned, and the response characteristic is observed with an oscilloscope 136.

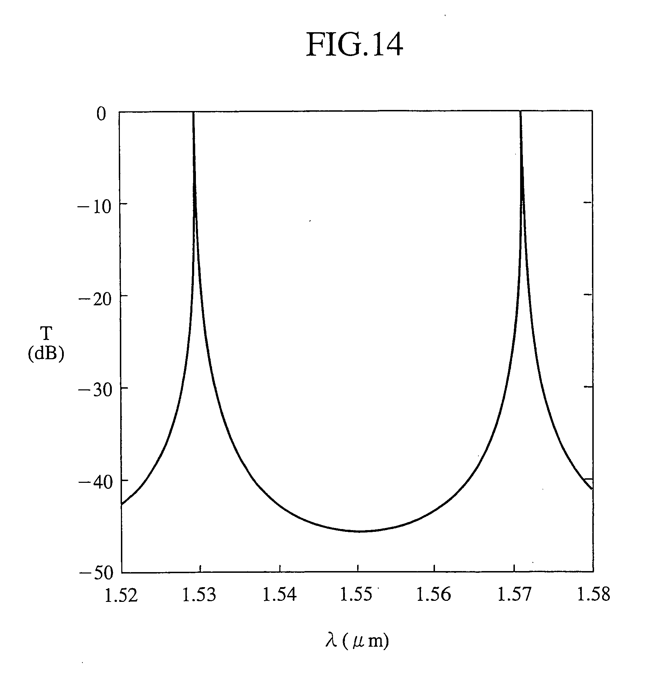

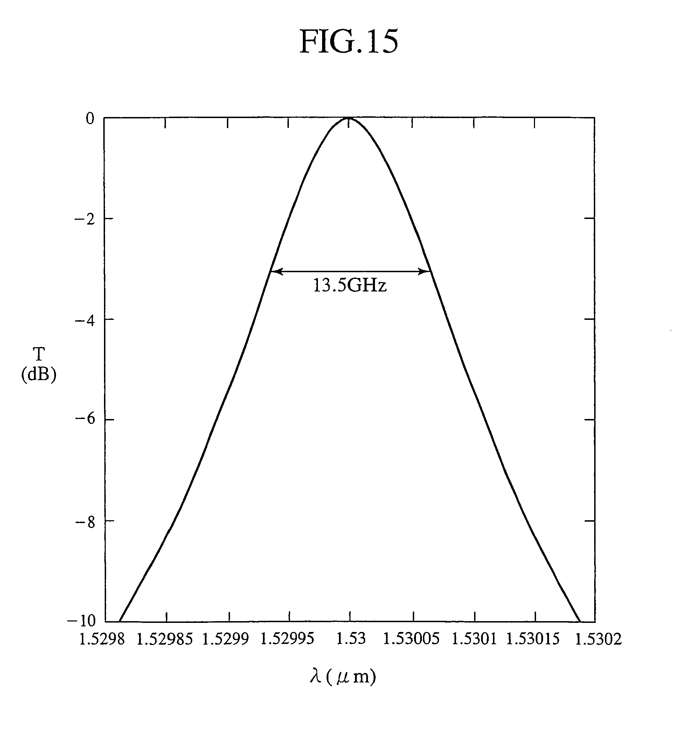

FIG. 14 illustrates a transmission spectrum of the wavelength tunable optical filter shown in FIG. 11. FIG. 15 illustrates a 3dB passband of the wavelength tunable optical filter shown in FIG. 11.

The center wavelength of the transmission peak of the wavelength tunable optical filter 110 is 1570 nm as designed, and the FSR turns out to be 40 nm. In addition, in this embodiment, the transmission spectrum width specified by 3dB by the 3db coupler 37 is 13.5GHz. Moreover, an extinction ratio of -40dB with respect to a stopband is obtained.

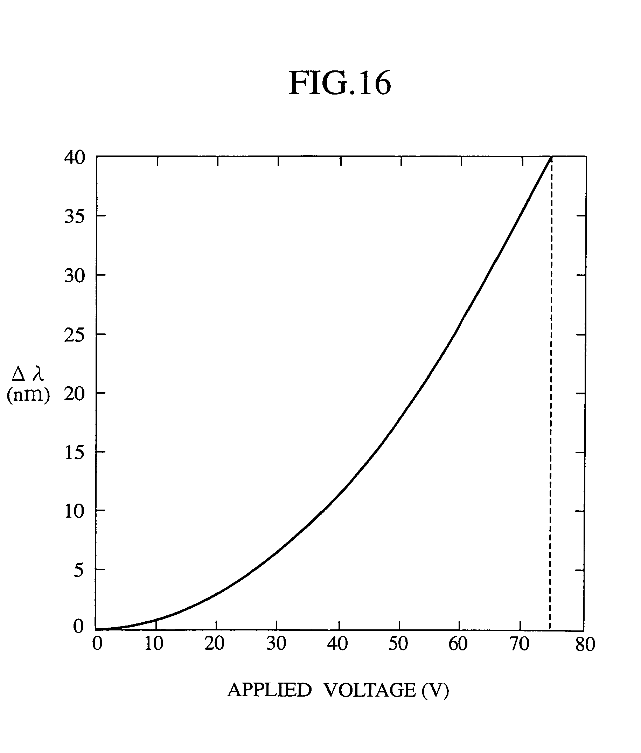

FIG. 16 illustrates a wavelength tunable characteristic of the wavelength tunable optical filter 110 shown in FIG. 11. As apparent from FIG. 16, the wavelength tunable optical filter 110 is capable of changing the wavelength in the passband by 40 nm by application of a voltage of 75 V.

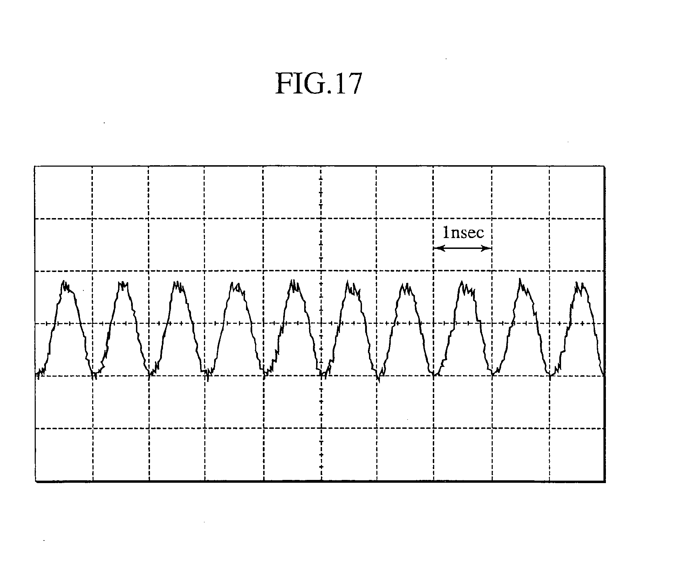

FIG. 17 is a figure illustrating the high-speed response characteristic of the wavelength tunable optical filter 110 of FIG. 11. The high-speed response characteristic was measured as follows. First, after the wavelength tunable optical filter 110 was arranged into the collimate optical system using two lenses, the filter 110 was mounted on the fiber connectable package. Then, the metal wiring connected to the transparent electrode of the filter 110 was connected to the casing with a gold wire, thereby finishing a module. Next, the light from the ASE light source 131 (FIG. 13) was introduced into the wavelength tunable optical filter 110 through the optical fiber connected to the module, and the exit light that has passed through the 1570 nm band path filter was detected by the photodetector.

Then, a rectangular voltage of 1 GHz generated from the pulse pattern generator 133 is amplified with an amplifier and a repetition voltage of 75 V is applied to electrodes 114,118 (FIG. 11) of the wavelength tunable optical filter 110 to observe a wavelength change of the light exiting from the wavelength tunable optical filter 110. From FIG. 7, it is understood that the light exiting from the wavelength tunable optical filter 110 responses to the applied voltage and a wavelength shift of 40 nm is achieved at 1 GHz (time needed for the change: 0.6 nsec).

As described above, according to the wavelength tunable optical filter 110 in this embodiment, it has been found that a wavelength change of 40 nm can be realized by application of a voltage of 75 V and the a rapid response that enables an add/drop of a packet can be realized.

By the way, in this embodiment, a $TeO_2$ system glass is used as the insulating layer 113, insulating materials having a lower relative electric permittivity than that of KLTN, such as $SiO_2$, $Al_2O_3$, polymer, and these complexes can be used for the insulating layer 113.


(A seventh embodiment)


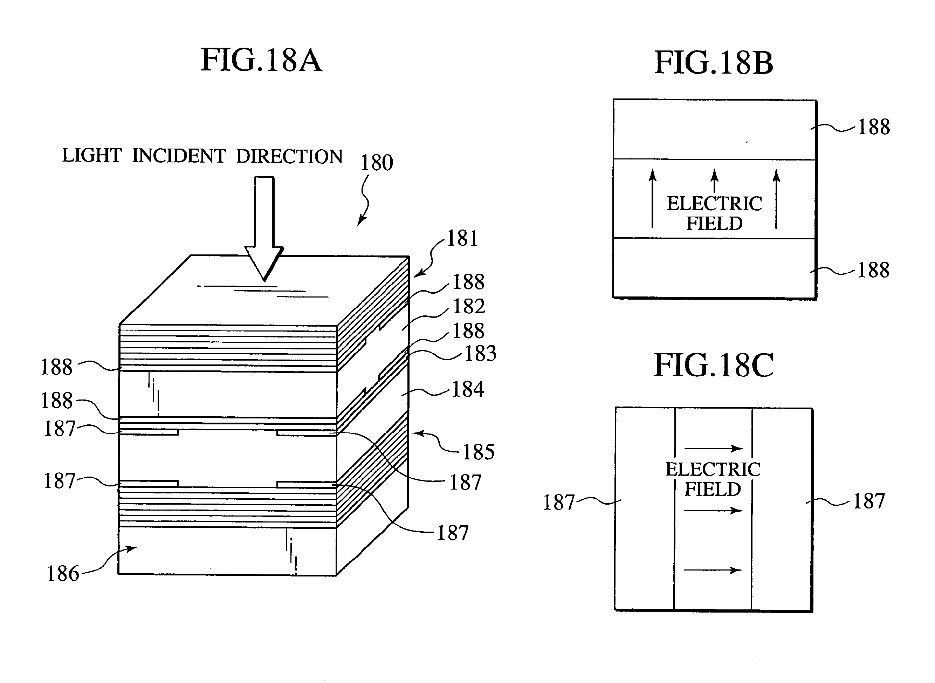

A seventh embodiment will be explained hereafter. FIG. 18A is a schematic view illustrating a configuration of a wavelength tunable optical filter 180 according to the seventh embodiment of the present invention. FIG. 18B is a plane view illustrating an electrode 187 of the wavelength tunable optical filter 180 shown in FIG. 18A. FIG. 18C is a plane view illustrating another electrode of the wavelength tunable optical filter 180 shown in FIG. 18A.

This wavelength tunable optical filter 180 has the same configuration as the wavelength tunable optical filter 110 in the sixth embodiment except for the shape of an electrode, as shown in FIG. 18A. Specifically, the wavelength tunable optical filter 180 is constituted by laminating a dielectric multilayer mirror 185 arranged on a glass substrate 186, a dielectric crystal 184 on which a rectangular electrode 187 (refer to FIG. 18C) has been arranged, an insulating layer 183, the dielectric crystal 182 on which an rectangular electrode 188 (refer to FIG. 18B) has been arranged, and a dielectric multilayer-film mirror 181.

Since the longitudinal edge of each of the two electrodes 187, 188 lies mutually at a right angle, two electric fields are generated in the two directions that intersect perpendicularly with each other. Moreover, since light is incident on perpendicularly on the upper surface of the dielectric multilayer-film mirror 181, the two electric fields generated in the two above-mentioned directions also intersect perpendicularly with the direction of incident light (the transmission direction), as shown in FIG. 18A.

Moreover, since the electrodes 187, 188 are configured as above, uniform electric fields are applied in the dielectric crystal portions 182,184. Also, according to the electrodes 187, 188 having such a configuration, the chip size required for mounting is prevented from becoming large, and the electrode spacing can be reduced down to 10 micrometers.

In addition, $TeO_2$ system glass is used as the insulating layer 183 as is the case with the wavelength tunable optical filter 110 according to the sixth embodiment.

The optical transmission characteristics of the wavelength tunable optical filter 180 are the same as that of the wavelength tunable optical filter 110 according to the sixth embodiment, and change of the filter characteristics by having changed the configuration of the electrodes has not been seen. Also, no significant difference has been found in two polarization components that intersect perpendicularly.

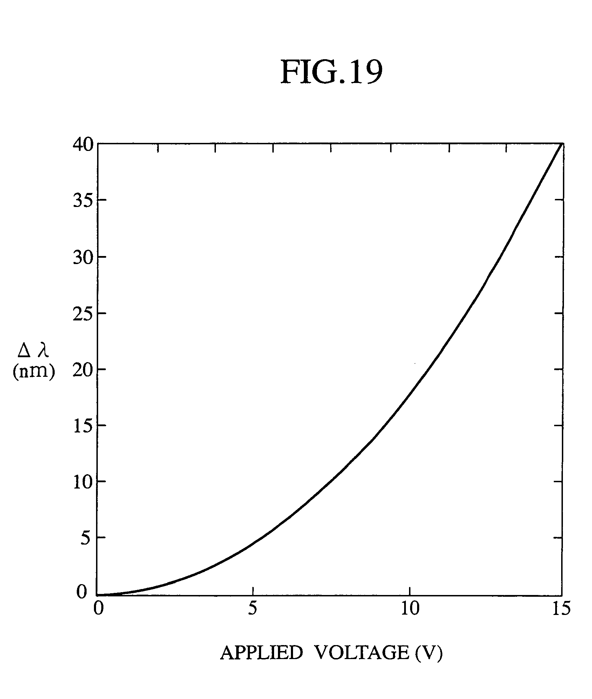

FIG. 19 illustrates the wavelength tunable characteristics of a wavelength tunable optical filter 8. In this embodiment, while the electric field required for realizing a desired wavelength change is the same as that of the wavelength tunable optical filter according to the sixth embodiment, the electrode spacing can be set arbitrarily. Also, since an effective voltage to be applied is in inverse proportion to the electrode spacing, the voltage can be reduced by narrowing the electrode spacing. In this embodiment, a wavelength change of 40 nm is realized by applying a voltage of 15 V to the electrodes having a 10-micrometer spacing as shown in FIG. 19. Furthermore, using electrodes having a 5-micrometer spacing, the same change of 40 nm turns out to be possible by applying a voltage of as small as 8 V.

However, if an electrode spacing is decreased, an effective opening for incident light to pass through becomes small, which then requires accuracy in mounting. Therefore, an electrode spacing needs to be designed with a consideration of whether a low voltage or a mounting accuracy is prioritized.

By the way, while a $TeO_2$ system glass was used as the insulating layer 183 in this embodiment, any insulating material such as $SiO_2$, $Al_2O_3$, polymer, and these complexes, can be used to realize the above wavelength tunable optical filter, if the material has a lower relative electric permittivity than KLTN.

By adopting the configuration in the above embodiment, the wavelength tunable optical filter is realized in which an electrode spacing is set independently of a desired FSR and thereby a low voltage drive and wavelength change in a broader band are realized.

(An eighth embodiment)

In an eighth embodiment, a multi-stage wavelength tunable optical filter will be described. The multi-stage wavelength tunable optical filter is configured so as to have two wavelength tunable optical filters each having almost the same configuration as the wavelength tunable optical filter according to seventh embodiment and having a different FSR of 10 nm and 8 nm, respectively, the two wavelength tunable optical filter being combined in series via the dielectric multilayer-film mirror. The center wavelength of the penetration spectrum of each wavelength tunable optical filter at the time of no electric field applied was set as 1570 nm.

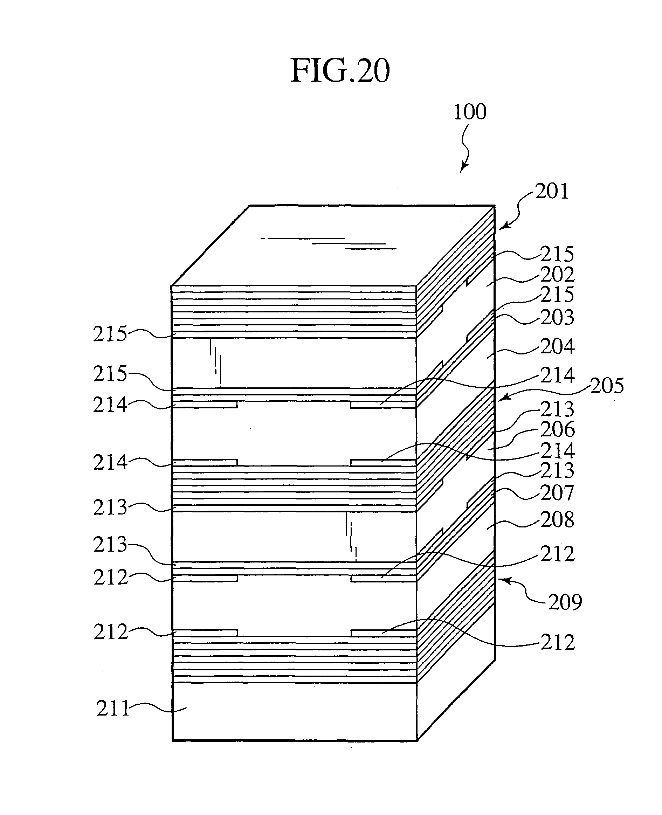

FIG. 20 is a schematic view of a wavelength tunable optical filter 100 according to the eighth embodiment of the present invention.

The wavelength tunable optical filter 100 is configured by stacking a dielectric multilayer-film mirror 209 disposed on a glass substrate 211, a dielectric crystal portion 208 on which a rectangular electrode 212 is arranged, an insulating layer 207, a dielectric crystal portion 206 on which a rectangular electrode 213 is arranged, and a dielectric multilayer-film mirror 205, a dielectric crystal portion 204 on which a rectangular electrode 214 is arranged, an insulating layer 203, a dielectric crystal portion 202 on which a rectangular electrode 215 is arranged, and a dielectric multilayer-film mirror 201. In other words, the wavelength tunable optical filter 100 in this embodiment is constituted so as to have two wavelength tunable optical filters 180 according to sixth embodiment superposed with each other.

Since the longitudinal edge of electrodes 212, 213, 214, and 215 lies at a right angle alternately, the electric fields intersecting perpendicularly to a direction of incident light (the transmission direction) and intersecting perpendicularly with the adjacent electric field alternately will be generated in the dielectric crystal portions 208, 206, 204, and 202.

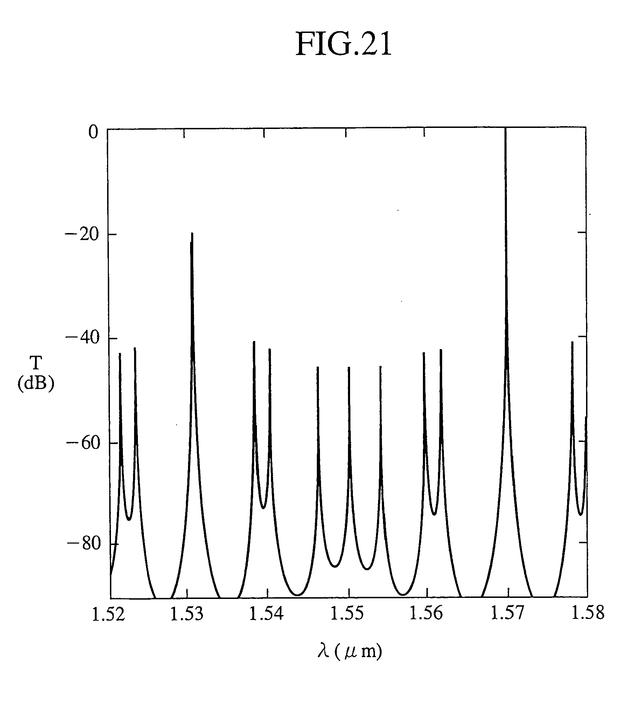

FIG. 21 illustrates a transmission spectrum of the wavelength tunable optical filter 100 shown in FIG. 20. As apparent from FIG. 21, an extinction ratio of -40 dB with respect to a stopband is realized in a wavelength range from 1530 nm to 1570 nm. The large extinction ratio results from the fact that the transmission spectrum (peak wavelength) of the two-stage filter having two independent filters each having a different FSR of 8 nm and 10 nm appears only at intervals of the least common multiple of the two FSRs. In this embodiment, since the least common multiple is 40 nm, only one transmission peak exists in the wavelength band to be used.

A transmission wavelength of a Fabry-Perot etalon type wavelength filter is expressed as,

$$\lambda = C / (m \Delta\nu) \qquad (8)$$

where, C is the velocity of light, m is an integer, and $\Delta\nu$ is an FSR of a desired filter.

Moreover, $\Delta\nu$ is expressed as,

$$\Delta\nu = C /(2 n 1) \qquad (9).$$

Here, n is a refractive index and l is the thickness of a dielectric crystal portion.

From the above equation, a wavelength tunable optical filter having a desired FSR is designed by changing the thickness of the dielectric crystal portion of a wavelength tunable optical filter based on the equation (8). Also from the equation (8), it is possible to determine that the transmission peak corresponding to a certain number m is used for a desired wavelength.

When such a configuration is adopted, a wavelength tunable optical filter having a broad wavelength tunable range along with an FSR (or wavelength variable width) that is smaller than a desired wavelength tunable range can be obtained. According to a conventional configuration in which two separate wavelength tunable optical filters having a different FSRs are combined, since the thickness of a KLTN crystal becomes thick with a reduction in FSR, high application voltage is needed even if a small wavelength variable width is realized.

For example, although a voltage of 65V is needed in order to obtain a wavelength variable width of 10 nm with the wavelength tunable optical filter having an FSR of 10 nm, a 10 nm wavelength tunable range can be realized by application of a voltage of 7. 5V, according to the electrode configuration that the wavelength tunable optical filter 100 in this embodiment has. This is equivalent to about 1/10 compared to conventional filters, and serves as a basis of the advantages of this invention.

(A ninth embodiment)

A wavelength tunable optical filter according to a ninth embodiment corresponds to a modification of the wavelength tunable optical filter according to the seventh embodiment and has a dielectric crystal portion formed of a $BaTiO_3$ crystal instead of a KLTN crystal. By the way, the only difference between the wavelength tunable optical filters in this embodiment and in the seventh embodiment lies in the above respect.

In this case, since the phase transition temperature is 109 degrees Celsius, an operation temperature is as high as 110 degrees Celsius. However, the wavelength tunable range of 40 nm is realized by application of a voltage of 15V.

Moreover, a response speed is substantially the same as that of the wavelength tunable optical filter according to the seventh embodiment, which means that the wavelength tunable optical filter according to the ninth embodiment can respond to an application of voltage at 1 GHz.

Moreover, even if the wavelength tunable optical filter according to the seventh embodiment is fabricated using a $BaTiO_3$ crystal, substantially the same operating characteristics as that of the wavelength tunable optical filter using a KLTN crystal according to the seventh embodiment are realized.

(A tenth embodiment)

A wavelength tunable optical filter according to this embodiment corresponds to a modification of the wavelength tunable optical filter according to the ninth embodiment, and has a dielectric crystal portion formed of a $Ba_{0.73}Sr_{0.27}TiO_3$ instead of a $BaTiO_3$ crystal. By the way, the difference between the wavelength tunable optical filter according to this embodiment and the wavelength tunable optical filter according to the ninth embodiment lies only in the above-mentioned respect.

In this case, the phase transition temperature is 9 degrees Celsius, and an operation temperature is 10 degrees Celsius. By replacing part of Ba with Sr, the operation temperature can be set to temperatures around room temperature. The other characteristics are substantially the same as those of the wavelength tunable optical filter according to ninth embodiment. Moreover, even if PLZT is used as a dielectric crystal portion, substantially the same wavelength tunable width is obtained.

(An Eleventh to a fourteenth embodiment)

Prior to an explanation of an eleventh to a fourteenth embodiment, the basic principle of these embodiments will be explained in line with the basic principle of the first to the tenth embodiments mentioned above.

First, a characteristics of a Fabry-Perot etalon type wavelength tunable optical filter is explained. FSR and Finess are cited as criteria for describing the characteristics of a Fabry-Perot etalon. The center frequency $\nu_m$ of the passband of a Fabry-Perot etalon is expressed as follows:

$$\nu_m = m\ c\ /(2\ n\ l\ \cos\ \theta) \qquad (10)$$

where, n is a refractive index; I is a resonator length; $\theta$ (theta) is an angle of the etalon with respect to a direction of incident light; and c is the velocity of light in vacuum.

Since an FSR (Free Spectral Range) is a spacing between adjoining two passband center wavelengths expressed with the equation (10), the FSR is expressed as:

$$FSR\ =\ \nu_{m+1}\ -\ \nu_m\ =\ c\ /(2\ n\ l\ \cos\ \theta) \qquad (11)$$

In addition, Finess is a value that expresses a broadening of a passband and expressed as:

$$Finess\ =\ FSR\ /\ \Delta\nu_{1/2}\ =\ \pi\ R^{1/2}/(1\ -\ R) \qquad (12)$$

where, $\Delta\nu_{1/2}$ is a full width at half maximum; and R is a reflectivity of the mirror that constitutes a resonator.

From the equation (10), in order to change the passband center frequency, either one of a refractive index n, the resonator length 1, and the angle $\theta$ of the etalon needs to be changed. Therefore, when these parameters are changed, a wavelength tunable optical filter can be realized. Many of wavelength tunable optical filters available in the market change a resonator length to change a wavelength, because a broader wavelength tunable range is realized when the resonator length 1 among the three parameters is changed.

However, since a mechanical operation is indispensably required in order to change the resonator length 1 (or the angle $\theta$ of an etalon), it is not suitable for high-speed operation.

On the other hand, according to a method of changing a refractive index n, it is possible to change the center wavelength of the passband without any mechanical operation. As a method of changing a refractive index, thermo-optic (TO) effect, acousto-optic (AO) effect, and electro-optic (EO) effect can be cited. Among these, TO effect is rather unsuitable because this effect only is able to exhibit a response of an order of a few milliseconds. In addition, since AO effect yields only a small change in refractive index, this effect cannot induce a sufficient change in refractive index, although AO effect is more suitable for high-speed operation if compared with TO effect.

In contrast to the above two effects, EO effect is suitable for a wavelength tunable optical filter requiring a high-speed operation, since the effect is suitable for a high-speed operation and obtains a sufficient change in refractive index. EO effect is categorized into the following two effects: the linear electro-optic effect (Pockels effect) and the quadratic electro-optic effect (Kerr effect). The linear electro-optic effect exhibits its characteristic in proportion to electric-field intensity, and refractive-index change is expressed as:

$$\Delta n\ =\ -\ n_0\ r_{eff}\ E\ /\ 2 \qquad (13).$$

where, no is a refractive index at the time of no electric field applied; $r_{eff}$ is an effective value of the linear electro-optic constant; and E is electric-field intensity.

On the other hand, the quadratic electro-optic effect exhibits its characteristic in proportion to the square of electric-field intensity, and a refractive-index change is expressed as:

$$\Delta n \ = \ n_0{}^3 \ s_{12} \ E^2 \ / \ 2 \qquad (14)$$

where, no is a refractive index at the time of no electric field applied and E is electric-field intensity. Moreover, $s_{12}$ is defined by the following equation (15).

$$s_{12} \ = \ \varepsilon_0{}^2 \ \varepsilon_r{}^2 \ g_{12} \qquad (15)$$

where, $\varepsilon_0$ is the electric permittivity of vacuum; $\varepsilon_r$ is a relative electric permittivity inherent in a substance; and $g_{12}$ is an electro-optic constant of the substance.

Therefore, since use of the quadradic electro-optic effect brings about a refractive index change in proportion to the square of the applied voltage, a desired refractive index is induced by applying relatively small voltage. Furthermore, the electro-optic effect can respond to an application of high frequency voltage of about 1 GHz in principle.

However, since an applicable voltage per unit thickness of a substance has always a limit, the voltage cannot be increased as much as possible.

Then, in the eleventh to the fourteenth embodiment, a multi-stage wavelength tunable optical filter including two or more wavelength tunable optical filters exemplified in the first to the tenth embodiment will be proposed. In this type of optical filter, each wavelength tunable optical filter is arranged along a transmission direction of light incident upon the dielectric crystal portion of the filters. Moreover, each wavelength tunable optical filter is desirably arranged so as to be inclined at 2 degrees or more compared with a parallelly arranged position. Also, each wavelength tunable optical filter is desirably configured such that they are temperature-controlled and a voltage is applied while the temperature thereof is kept constant. With this configuration, FSR can be changed and a desired passband can be obtained. Since each wavelength tunable optical filter has the excellent characteristics of a high-speed operation, a low drive voltage and a broad wavelength tunable range as mentioned above, a multi-stage wavelength tunable optical filter can also realize a high performance that the conventional wavelength tunable optical filters have never realized.

By the way, "to be inclined at 2 degrees or more compared with a parallelly arranged position" means that a plane perpendicular to the transmission direction of the light incident upon the dielectric crystal is inclined at 2 degrees or more with respect to a plane with which a crystal axis of the dielectric crystal intersects. The same is true in the similar expression hereinafter

In addition, even if each filter is inclined at 2 degrees or more, the operational effect demonstrated when a crystal axis of a dielectric crystal is in agreement with a transmission direction of light is not deteriorated significantly. For this reason, in the following explanation, it is assumed that the crystal axis of a dielectric crystal is in agreement with a transmission direction of light, even when the filter is arranged with an inclination angle of 2 degrees or more.

Next, each of the eleventh to the fourteenth embodiments is explained specifically. The following embodiments are intended for purposes of illustration only and are not intended to limit the scope of the invention. Therefore, although those skilled in the art can adopt various kinds of modifications or alterations containing all or every element of the invention, those are also included in the scope of this invention.

(An eleventh embodiment)

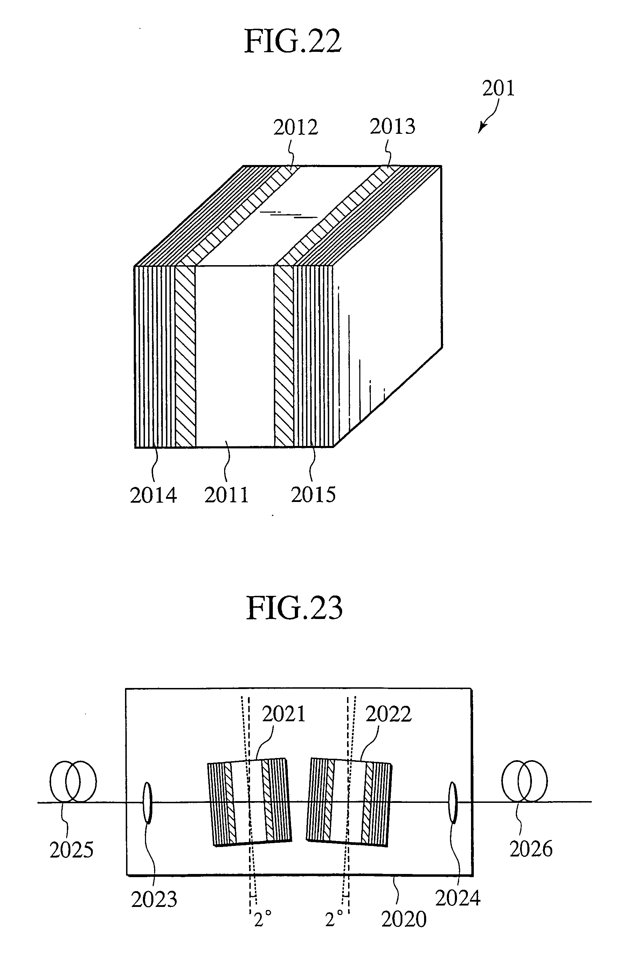

FIG. 22 is a schematic view illustrating a wavelength tunable optical filter that constitutes a multi-stage wavelength tunable optical filter according to the eleventh embodiment. A wavelength tunable optical filter 201 is configured so that transparent electrodes 2012, 2013 are disposed on both sides of a dielectric crystal portion 2011 formed of a thinned dielectric crystal and then on the outer sides thereof are disposed dielectric multilayer mirrors 2014, 2015, respectively. In other words, the wavelength tunable optical filter 201 has the same configuration as that in the first to the fifth embodiment.

FIG. 23 is a schematic view of a two-stage wavelength tunable optical filter according to the eleventh embodiment of the present invention. In FIG. 23, wavelength tunable optical filters 2021, 2022 have the same configuration of the wavelength tunable optical filter 201 shown in FIG. 22.

A dielectric crystal portion 2011 of the wavelength tunable optical filters 2021, 2022 is formed of KLTN. A phase transition temperature of KLTN can be adjusted to -15 degrees Celsius by controlling a composition ratio of Li and Nb.

Specifically, the composition of the dielectric crystal is $K_{0.96}Li_{0.04}Ta_{0.77}Nb_{0.23}O_3$. Although the Li composition ratio is 0.04 in this embodiment, a Li composition ratio of even 0.001 can make the crystal exhibit a second-order phase transition. Also, at a Li composition ratio of up to 0.1, the crystal can maintain a cubic system, which is feasible for a practical use. Particularly, a Li composition ratio from 0.01 to 0.06 leads to a high quality crystal and a relative electric permittivity of 20,000 or more.

An operation temperature of the wavelength tunable optical filters 2021, 2022 is -15 degrees Celsius and a relative electric permittivity of the dielectric crystal is 25,000 at around -15 degrees Celsius.

As shown in FIG. 22, the wavelength tunable optical filter 201 in this embodiment is configured by sandwiching the dielectric crystal portion 2011 formed of a dielectric crystal (a KLTN crystal plate) with ITO transparent electrodes 2012, 2013 and then disposing dielectric multilayer mirrors 2014, 2015 on the outer sides of the electrodes 2012, 2013.

The dielectric multilayer mirrors 2014, 2015 are formed of $SiO_2/Nb_2O_5$, which is a generally used material.

Referring to FIG. 23, a two-stage wavelength tunable optical filter 2020 according to the eleventh embodiment will be described in detail. The two-stage wavelength tunable optical filter 2020 has two wavelength tunable optical filters 2021, 2022, each of which has a respectively different FSR. The wavelength tunable optical filter 2021 has an FSR of 600 GHz; and the wavelength tunable optical filter 2022 has an FSR of 700 GHz. A combination of these two wavelength tunable optical filters realizes an FSR of 4.2 terahertz (THz) as described hereinafter.

In order to realize an FSR of 4.2 THz, the center frequency in the passband of each wavelength tunable optical filter 2021, 2022 needs to be shifted as much as an FSR. The center frequency is expressed as the equation (10). Changing "n" in the equation using an electro-optic effect causes a shift of the center frequency. In KLTN, $g_{12}$ is -0.038 $m^4/C^2$; $\varepsilon_r$ = is 25,000; and $\varepsilon_0$ is 8.854 x $10^{-12}$. By substituting these values into the equations (10), (14) and (15), it is understood that a thickness of the KLTN crystal is 115 micrometers and an applied voltage is 111 V in the wavelength tunable optical filter 2021 having an FSR of 600 GHz, whereas a thickness of the KLTN crystal is 99 micrometers and an applied voltage is 96 V in the wavelength tunable optical filter 2022 having an FSR of 700 GHz.

When a voltage to applied per a thickness of one micrometer is calculated from the applied voltage and the thickness obtained above, the voltage is found out to be 0.96 V/micrometer and 0.97 V/micrometer for the wavelength tunable optical filter 2021 (FSR = 600 GHz) and 2022 (FSR = 700 GHz), respectively.

By arranging these two wavelength tunable optical filters 2021, 2022 along a transmission direction of light as shown in FIG. 23, the two-stage wavelength tunable optical filter according to the eleventh embodiment is obtained. By the way, reference marks 2023, 2024 designate a micro lens and reference marks 2052, 2026 designate a single mode optical fiber.

Also shown, each of the two wavelength tunable optical filters 2021, 2022 is inclined at 2 degrees in comparison with a parallelly arranged position in which the two filters 2021, 2022 are disposed parallelly with each other. The distance between neighboring filters is about 2 mm. Light having a wavelength of 1.55 micrometers that passes through the optical fiber is made into a light beam having a diameter of 250 micrometers by micro lenses 2023, 2024 and then introduced into the wavelength tunable optical filters 2021, 2022. When the filters are entirely kept at -13 degrees Celsius by a Peltier device and its optical properties are measured, an FSR of 4.1 THz is obtained.

Next, when a center wavelength shift is measured by applying a voltage to the wavelength tunable optical filters 2021, 2022, a shift corresponding to an FSR of 4.1 THz is observed. From these results, it has been found that the two-stage wavelength tunable optical filter according to this embodiment functions as a filter having a wide FSR of 4.1 THz.

(A twelfth embodiment)

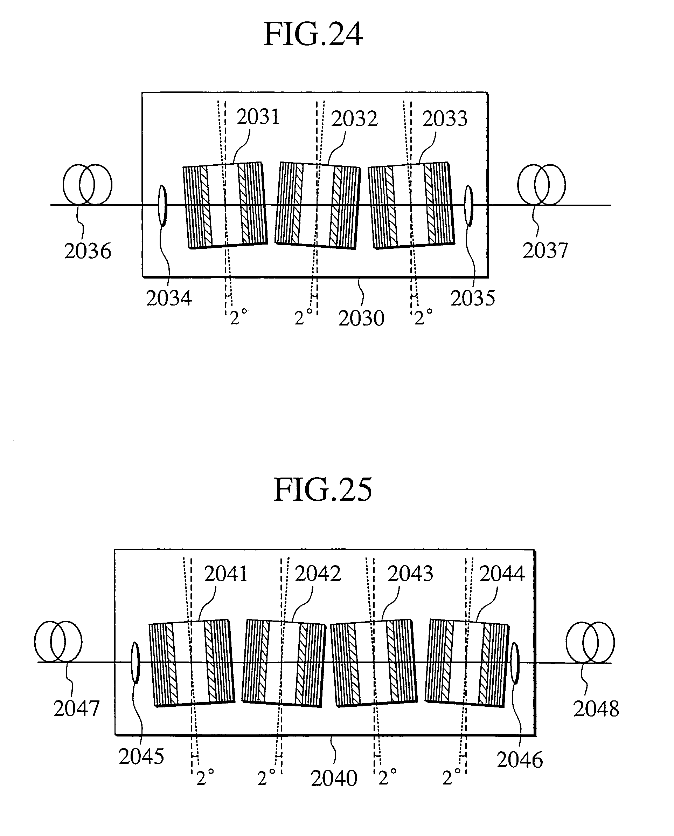

FIG. 24 is a schematic view of a three-stage wavelength tunable optical filter according to a twelfth embodiment of the present invention. As shown, a three-stage wavelength tunable optical filter 2030 includes three wavelength tunable optical filters 2031, 2032, 2033.

These three wavelength tunable optical filters 2031, 2032, 2033 have the same configuration as the wavelength tunable optical filter shown in FIG. 22. In other words, the wavelength tunable optical filters 2031, 2032, 2033 are obtained by configuring a Fabry-Perot etalon so that that a dielectric crystal portion 2011 formed of a dielectric crystal (a KLTN crystal plate) is sandwiched by ITO transparent electrodes 2012, 2013 and then on the both side thereof are disposed dielectric multilayer mirrors 2014, 2015, respectively.

The dielectric crystal portion 2011 in these wavelength tunable optical filters is formed of KLTN, of which phase transition temperature is adjusted to be -15 degrees Celsius by adjusting the composition ratio of Li and Nb. Specifically, the dielectric crystal has a composition of $K_{0.96}Li_{0.04}Ta_{0.77}Nb_{0.23}O_3$. Although the Li composition ratio is 0.04 in this embodiment, the Li composition ratio of 0.001 assures a second-order phase transition and the Li composition of 0.1 realizes a cubic system, which is feasible for a practical use. Especially, in a range of 0.01 to 0.06 in the Li composition ratio, a high quality crystal having an electric permittivity of 20,000 or more is realized.

The operation temperature of the wavelength tunable optical filters 2031, 2032, 2033 is -15 degrees Celsius and a relative electric permittivity of the dielectric crystal portion thereof is 25,000 at -15 degrees Celsius.

In addition, the dielectric multilayer mirrors 2014, 2015 are formed of $SiO_2/Nb_2O_5$, which is a generally used material.

The wavelength tunable optical filters 2031, 2032, 2033 have a respectively different FSR. Specifically, the wavelength optical filters 2031, 2032, and 3033 have an FSR of 300 GHz, 400 GHz and 500 GHz, respectively. By combining these three filters 2031, 2032, 2033, an FSR of 6.0 THz is realized as described below.

In order to obtain an FSR of 6.0 THz, the center wavelength in the passband of each wavelength tunable optical filter needs to be shifted by as much as an FSR. The center wavelength in the passband is expressed by the equation 10. By changing "n" in the equation (10) by use of electro-optic effect, the center wavelength can be shifted. Since $g_{12}$ is equal to -0.038 m$^4$/C$^2$; $\varepsilon_r$ is equal to 25,000; and $\varepsilon_0$ is equal to 8.854 x 10$^{-12}$, it is understood by substituting these values into the equations (10), (14) and (15) that a KLTN thickness is 230 micrometers and an applied voltage is 94 volts for the wavelength tunable optical filter 2031 having an FSR of 300 GHz; a KLTN thickness is 173 micrometers and an applied voltage is 112 volts for the wavelength tunable optical filter 2032 having an FSR of 400 GHz; and a KLTN thickness is 138 micrometers and an applied voltage is 113 volts for the wavelength tunable optical filter 2033 having an FSR of 500 GHz.

When a voltage to be applied per one micrometer is calculated with the applied voltage and the thickness obtained above, the voltage is found to be 0.41 V/micrometer, 0.65 V/micrometer, and 0.82 V/micrometer for wavelength tunable optical filters 2031, 2032, 2033, respectively.

The three-stage wavelength tunable optical filter according to this embodiment is obtained by arranging these wavelength tunable optical filters 2031, 2032, 2033 along the transmission direction of light.

By the way, reference marks 2034, 2035 represent a micro lens and reference marks 2036, 2037 represent a single mode optical filter.

In addition, each of the three wavelength tunable optical filters 2031, 2032, 2033 is inclined at 2 degrees in comparison with a parallelly arranged position as shown in FIG. 24. In other words, a plane intersecting orthogonally with a crystal axis of the dielectric crystal constituting the dielectric crystal portion of the wavelength tunable optical filter is inclined at 2 degrees with respect to the plane intersecting orthogonally with the transmission direction of light. The distance between neighboring filters is about 2 mm. Light having a wavelength of 1.55 micrometers that passes through the optical fiber is made into a light beam having a diameter of 250 micrometers by micro lenses 2034 (2035) and then introduced into the three-stage wavelength tunable optical filter 2030. When the filter 2030 is entirely kept at a temperature of -13 degrees Celsius by a Peltier device and its optical properties are measured, an FSR of 5.8 THz is obtained.

Next, when a voltage is applied to the wavelength tunable optical filters 2031, 2032, 2033 and a shift of the center wavelength in the passband is measured, an FSR shift of 4.1 THz is obtained. This means that the three-stage wavelength tunable optical filter according to this embodiment functions as a filter.

FSRs of 5. 8 THz and 4. 1 THz are large enough and lie within a feasible range for a proper operation of the wavelength tunable optical filter. Therefore, it has been found that the three-stage wavelength tunable optical filter that operates at high speed is obtained by utilizing the wavelength tunable optical filters having an FSR of 300 GHz, 400 GHz, and 500 GHz, respectively.

(A thirteenth embodiment)

FIG. 25 is a schematic view of a four-stage wavelength tunable optical filter according to a thirteenth embodiment of the present invention. As shown, the four-stage wavelength tunable optical filter includes four wavelength tunable optical filters 2041, 2042, 2043, 2044.

These four wavelength tunable optical filters have substantially the same configuration as the filter described in the sixth embodiment shown in FIG. 11.

In other words, the wavelength tunable optical filters 2041, 2042, 2043, 2044 are each obtained so that ITO transparent electrodes 2012, 2013 are disposed on both sides of a dielectric crystal portion 2011 formed of a dielectric crystal (a KLTN crystal plate) and then on the outer sides thereof are disposed dielectric multilayer mirrors 2014, 2015.

The dielectric crystal portion 2011 is composed of a dielectric crystal formed of KLTN. By adjusting a composition ratio of Li and Nb, a phase transition temperature of the crystal can be set to -15 degrees Celsius.

Specifically, the dielectric crystal concerned has a composition of $K_{0.96}Li_{0.04}Ta_{0.77}Nb_{0.23}O_3$. Although the Li composition ratio is 0.04 in this embodiment, a Li composition ratio of 0.001 assures a second order phase transition and a Li composition of 0.1 realizes a cubic system. Especially, in a range of 0.01 to 0.06 in the composition ratio, a high quality crystal having an electric permittivity of 20,000 or more is realized.

An operation temperature of the wavelength tunable optical filters 2041, 2042, 2043, 2044 is -15 degrees Celsius and the relative electric permittivity of the dielectric crystal is 25,000 at around -15 degrees Celsius.

The dielectric multilayer mirrors 2014, 2015 are formed of $SiO_2/Nb_2O_5$, which is a generally used material.

The wavelength tunable optical filters 2041, 2042, 2043, 2044 have a respectively different FSR. Specifically, the wavelength tunable optical filters 2041, 2042, 2043, and 2044 have an FSR of 200 GHz, 300 GHz, 500 GHz, and 700 GHz, respectively. By combining these four filters, an FSR of 21.0 THz is realized as described blow.

In order to realize an FSR of 21.0 THz, the center wavelength in the passband of each wavelength tunable optical filter needs to be shifted by as much as an FSR. The center wavelength in the passband is expressed by the equation (10). By changing n in the equation 10 by use of electro-optic effect, the center wavelength can be shifted.

Since $g_{12}$ is equal to -0.038 m$^4$/C$^2$; $\varepsilon_r$ is equal to 25,000; and $\varepsilon_0$ is equal to 8.854 x 10$^{-12}$, it is understood by substituting these values into the equations (10), (14) and (15) that a KLTN thickness is 345 micrometers and an applied voltage is 134 volts for the wavelength tunable optical filter 2041 (FSR of 200 GHz); a KLTN thickness is 230 micrometers and an applied voltage is 94 volts for the wavelength tunable optical filter 2042 (300 GHz); a KLTN thickness is 138 micrometers and an applied voltage is 113 volts for the wavelength tunable optical filter 2043 (500 GHz); and a KLTN thickness is 99 micrometers and an applied voltage is 112 volts for the wavelength tunable optical filter 2044 (700 GHz).

When a voltage to be applied per one micrometer is calculated with the voltage and the thickness obtained above, the voltage is found to be 0.39, 0.4, 0.9, and 0.97 V/micrometer for the wavelength tunable optical filters 2041 (FSR = 200 GHz), 2042 (FSR = 300 GHz), 2043 (FSR = 500 GHz), and 2044 (FSR = 700 GHz), respectively.

The four-stage wavelength tunable optical filter 2040 according to this embodiment is obtained by disposing these wavelength tunable optical filters 2041, 2042, 2043, 2044 along the transmission direction of light. By the way, reference marks 2045, 2046 represent a micro lens and reference marks 2047, 2048 represent a single mode optical filter in FIG. 25.

In addition, as shown in FIG. 25, each of the four wavelength tunable optical filters 2041, 2042, 2043, 2044 is inclined at 2 degrees in comparison with a parallelly arranged position in which the four filters 2041, 2042, 2043, 2044 are disposed parallelly with one. In other words, a plane intersecting orthogonally with a crystal axis of the dielectric crystal constituting the dielectric crystal portion of the wavelength tunable optical filter is inclined at 2 degrees with respect to a plane intersecting orthogonally with the transmission direction of light. The distance between neighboring filters is about 2 mm. Light having a wavelength of 1.55 micrometers that passes through the optical fiber is made into a light beam having a diameter of 250 micrometers and then introduced into the multistage wavelength tunable optical filter 2040. Optical properties are measured, while this filter 2040 is entirely kept at -13 degrees Celsius by a Peltier device. As a result, an FSR of 20.0 THz is found to be obtained.

Next, when a shift in the center wavelength in a passband is measured by applying a voltage to each wavelength tunable optical filter 2041, 2042, 2043, 2044, a shift corresponding to an FSR of 20.0 THz is found, which shows a function as a filter.

The above values are found to be small enough and lie within a feasible range for a proper operation of a wavelength tunable optical filter. Therefore, it has been found that the four-stage wavelength tunable optical filter that operates at high speed is obtained by utilizing the wavelength tunable optical filters having an FSR of 200 GHz, 300 GHz, 500 GHz, and 700 GHz, respectively.

(A fourteenth embodiment)

In the eleven to the thirteen embodiment, a multi-stage wavelength tunable optical filter has been described, the filter including more than two wavelength tunable optical filters in which electric fields are produced parallelly with a transmission direction of light in a dielectric crystal. Then, a multi-stage wavelength tunable optical filter will be described in the following embodiments, the filter including more than two wavelength tunable optical filters in which electric fields are produced orthogonally with a transmission direction of light in a dielectric crystal.

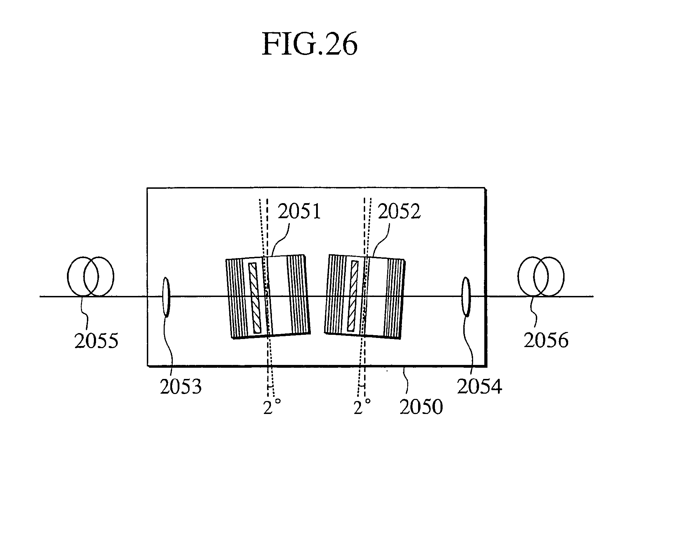

FIG. 26 is a schematic view of a two-stage wavelength tunable optical filter according to a fourteenth embodiment of the present invention. A multistage wavelength tunable optical filter 2050 has wavelength tunable optical filters 2051, 2052, of which are temperature-controlled by a temperature controller such as a Peltier device (not shown). The wavelength tunable optical filters 2051, 2052 have the same configuration as the wavelength tunable optical filter 110 (FIG. 11) according to the sixth embodiment, except for an FSR and a composition of a dielectric crystal that constitutes a dielectric crystal portion. Referring to FIG. 11, the wavelength tunable optical filter according to this embodiment will be described.

As shown in FIG. 11, a two-stage wavelength tunable optical filter is configured by stacking a dielectric multilayer mirror 115, a dielectric crystal portion 117, an insulating layer 113, a dielectric crystal portion 112, and a dielectric multilayer mirror 111 in this order on a glass substrate 116. In addition, the wavelength tunable optical filter concerned has two electrodes 114 each on an opposing side of the dielectric crystal portion 117 and two electrodes 118 each on an opposing side of the dielectric crystal portion 112.

A composition of the dielectric crystal constituting dielectric crystal portions 112, 117 is $K_{0.96}Li_{0.04}Ta_{0.77}Nb_{0.23}O_3$. Although the Li composition ratio is 0.04 in this embodiment, a Li composition ratio of 0.001 allows for a second-order phase transition. Also, a Li composition of up to 0.01 realizes a cubic system, which is feasible for a practical use. Especially, in a range of 0.01 to 0.06 of the composition ratio, a high quality crystal having an electric permittivity of 20,000 or more is realized. An operation temperature of the wavelength tunable optical filter having the dielectric crystal with the above composition is -15 degrees Celsius and a relative electric permittivity of the crystal is 25,000 at -15 degrees Celsius.

The KLTN crystal used in this embodiment has a quadratic electro-optic effect as described above. A change in refractive index is expressed by the above-mentioned equations (5) and (6) with respect to a direction of an electric field produced with the configuration shown in FIG. 11.

As apparent from these equations, since refractive index changes differently depending on a direction of an electric field, when two electric fields are applied in mutually orthogonal directions with respect to the transmission direction of light, an entire change in refractive index is expressed by an equation (7) which is an addition of the equations (5) and (6). The refractive index changes equally for the two polarized lights that intersect orthogonally with each other, thereby realizing polarization independent operation.

Assuming that the two-stage wavelength tunable optical filter 2050 is used in a telecom window of 1530 nm to 1570 nm (C band), the wavelength tunable optical filters 2051, 2052 are designed so that the center wavelength of 1579 nm can pass therethrough when no electric field is produced. In addition, in order to realize a tunable range of 40 nm, the wavelength tunable optical filters 2051, 2052 are designed so as to have an FSR of 600 GHz and 700 GHz, respectively. In this case, the total thickness of the dielectric crystal (KLTN) in the wavelength tunable optical filter 2051 (FSR 600 GHz) is 115 micrometers. Therefore, each dielectric crystal portion is about 57 micrometers thick. Also, the total thickness of the dielectric crystal (KLTN) in the wavelength tunable optical filter 2052 (FSR 700 GHz) is 99 micrometers. Therefore, each dielectric crystal portion is about 49 micrometers thick.

Referring back to FIG. 11, the insulating layer 113 of the wavelength tunable optical filters 2051, 2052 is formed of a $TeO_2$ system glass. The reason why the $TeO_2$ system glass is used is that its refractive index is almost the same as that of the KLTN crystal and a refractive index can be equal to KLTN by adjusting its composition, thereby reducing an optical reflection at the interface therebetween. In this case, the thickness of the insulating layer 113 is adjusted to $\lambda/2$. By the way, although the $TeO_2$ system glass is used as the insulating layer 113 in this embodiment, insulating materials having a lower relative electric permittivity than that of KLTN, such as $SiO_2$, $Al_2O_3$, polymer, and these complexes can be used to realize the filter.

The electrodes 114, 118 on the both side of each of the dielectric crystal portions 112, 117 are formed by vacuum-depositing a metal. As shown in FIG. 11, these electrodes 114, 118 are disposed so that an electric field in the dielectric crystal portion 112 is produced in a direction perpendicular to the page and an electric field in the dielectric crystal portion 117 is produced in a direction parallelly to the page.

The dielectric multilayer mirrors 111, 115 are formed of $SiO_2/Nb_2O_5$, which is a generally used material. These mirrors 111, 115 are formed so as to sandwich the dielectric crystal portions 112, 117 (and the dielectric crystal portion 112 therebetween), thereby configuring a Fabry-Perot etalon. In addition, the dielectric multilayer mirrors 111, 115 are designed so as to have a reflectance of 90 % at a wavelength of 1570 nm.

These two wavelength tunable optical filters 2051, 2052 having the above configuration are arranged along the transmission direction of light as shown in FIG. 26 and thus the two-stage wavelength tunable optical filter 2050 is obtained. By the way, reference marks 2053, 2054 represent a micro lens and reference marks 2055, 2056 represent a single mode optical fiber. These micro lenses and the single mode fiber constitute an optical collimate system and the multi-stage wavelength tunable optical filter 2050 is arranged therein.

Next, measurement results on optical properties of the two-stage wavelength tunable optical filter 2050 will be described. The measurement has been performed using a measurement system shown in FIG. 13, wherein light from an ASE light source 131 enters a filter module 200 on which the wavelength tunable optical filter 2050 is mounted and then the exited light therefrom is detected by a spectrum analyzer 132. When carrying out a measurement of a high-speed operation characteristics, a voltage pattern generated by a function generator 133 is amplified by an amplifier 134 for being applied to the filter 2050; the light exited from the filter 2050 is detected by a photodetector 135 and observed by an oscilloscope 136.

By the way, the filter module 200 is fabricated so that the two-stage wavelength tunable optical filter 2050 is mounted in the optical collimate system and a metal wiring is pulled out from the electrode to be connected to a casing with a gold wire.

When a high-speed operation measurement is performed, specifically, a rectangular voltage having a frequency of 1 GHz generated by the pulse pattern function generator 133 is amplified by the amplifier 134 and the amplified voltage of 30 V is applied to the two-stage wavelength tunable optical filter 2050. As a light source is used the ASE light source 131. The light form the light source 131 is introduced to the two-stage wavelength tunable optical filter 2050 and the exited light therefrom passes through a band pass filter of 1570 nm and is detected by the photo detector 135.

As a result, it has been found that high-speed response of the two-stage wavelength tunable optical filter according to this embodiment is substantially the same as that of the wavelength tunable optical filter according to the first embodiment (FIG. 7). In other words, the light that has transmitted through the two-stage wavelength tunable optical filter 2050 responses to an applied voltage and a wavelength shift of 40 nm at 1GHz is realized.

As stated above, the two-stage wavelength tunable optical filter according to this embodiment is capable of realizing a wavelength shift of 40 nm by application of a voltage of 30 V and a high-speed operation that enables an add/drop of a packet.

Moreover, by combining more than two wavelength tunable optical filters having a respectively different FSR, a wavelength tunable width required for each wavelength tunable optical filter is lower, compared with a single wavelength tunable optical filter, thereby realizing a low voltage operation.

By the way, while the fourteenth embodiment exemplifies a multi-stage wavelength tunable optical filter having two wavelength tunable optical filters, a filter having three or more wavelength tunable optical filters can demonstrate substantially the same operation and effect.

As stated above, according to the eleventh to the fourteenth embodiment, a multi-stage wavelength tunable optical filter using more than two wavelength tunable optical filters having a respectively different FSR is capable of reducing a voltage to be applied per unit thickness of the crystal and thus an operation under moderate conditions is realized. In addition, since a crystal having a quadratic electro-optic effect is utilized, a high-speed, wide range wavelength tunable optical filter is realized. Furthermore, the wavelength tunable optical filter according to the present invention is able to operate at high speed in a wide range of wavelength, thereby enabling a highly sophisticated operation of an add/drop of a packet and also a usage as a high-speed wavelength sweeper for use in optical measurements. Also, although a multiple reflection may occur in the wavelength tunable optical filter 26 illustrated in FIG. 8, the multi-stage wavelength tunable optical filter according to the eleventh to the fourteenth embodiment is able to prevent the multiple reflection.

(A fifteenth to sixteenth embodiment)

Prior to an explanation of a fifteenth to a sixteenth embodiment, a basic principle underlying these embodiments will be explained in line with the basic principle of the first to the fourteenth embodiment mentioned above.

When taking account of a high-speed response, a time constant of a device has to be taken into consideration. Since a Fabry-Perot etalon filter is configured so as to be sandwiched by electrodes, the filter has a certain electric capacitance and resistance. The capacitance is expressed as:

$$C = \varepsilon_0 \times \varepsilon_r \times S / d \qquad (16)$$

Here, d is a thickness of a dielectric; $\varepsilon_0$ is the electric permittivity of vacuum; $\varepsilon_r$ is a relative electric permittivity; and S is an area of the electrode.

From the equation (16), a reduction in an area S of the electrodes and an increase in the thickness d lead to a reduction in capacitance C.

In addition, resistance R of the electrode is expressed as:

$$R = \rho_v \times l / a \qquad (17)$$

where, $\rho_v$ is a volume resistivity of the electrode; l is a length of the electrode; and a is a cross-sectional area of the electrode.

The volume resistivity $\rho_v$ is a characteristic value inherent to a given material. The transparent electrode used in the wavelength tunable optical filter according to this embodiment has a volume resistivity of an order of $10^{-2}$ $\Omega$m and thus the resistance of the electrode becomes rather higher. Hence, the time constant RC inevitably becomes higher, which is disadvantageous for a high-speed operation. In order to eliminate this disadvantage, a use of a metal thin film coated on the transparent electrodes is applicable. Or, a metal thin film that can serve as both an electrode and a mirror is also applicable.

As stated above, by reducing an effective surface area of etalon as much as possible and a resistance of the electrode, a wavelength tunable optical filter can perform at high speed of an order of nanoseconds.

Next, the fifteenth and the sixteenth embodiment will be described in detail. The following embodiments are intended for purposes of illustration only and not construed as a limitation of the invention. Therefore, all such modifications and alterations that do not depart from the sprit of the invention are intended to be included within the scope of the appended claims.

(A fifteenth embodiment)

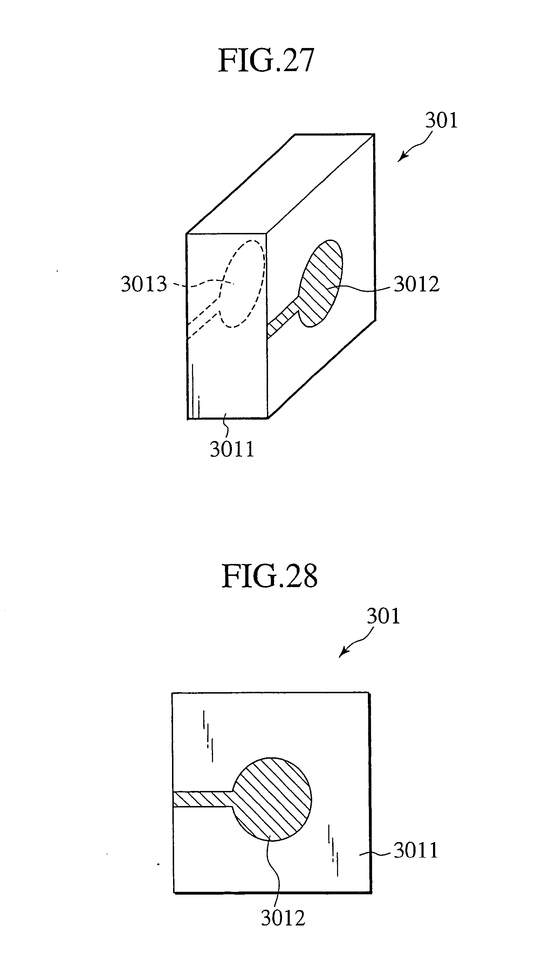

FIG. 27 is a perspective view of a wavelength tunable optical filter according to a fifteenth embodiment of the present invention. FIG. 28 is a plane view of a wavelength tunable optical filter according to the fifteenth embodiment of the present invention, seen from the direction of transmitting light. A wavelength tunable optical filter 301 is configured by disposing thin film metal electrodes 3012, 3013 on both sides of a thinned dielectric crystal portion 2011. The thin film metal electrodes 3012, 3013 serve as a mirror at the same time.

A dielectric crystal portion 3011 in the wavelength tunable optical filter 301 is formed of KLTN. A phase transition temperature thereof is adjusted to be -15 degrees Celsius by adjusting the composition ratio of Li and Nb.

Specifically, the dielectric crystal portion 3011 has a composition of $K_{0.96}Li_{0.04}Ta_{0.77}Nb_{0.23}O_3$. Although the Li composition ratio is 0.04 in this embodiment, a Li composition ratio of even 0.001 can make the crystal exhibit a second-order phase transition. Also, at a Li composition ratio of up to 0.1, the crystal can maintain a cubic system, which is feasible for a practical use. Especially, in a range of 0.01 to 0.06 in the Li composition ratio, a high quality crystal having an electric permittivity of 20,000 or more is realized.

An operation temperature of the wavelength tunable optical filter 301 is -15 degrees Celsius and a relative electric permittivity of the dielectric crystal is 25,000 at around -15 degrees Celsius.

The thin film metal electrodes 3012, 3013 are deposited by a vacuum evaporation method so as to cover the minimum necessary area that corresponds to an area through which the incident light passes. Specifically, the thin film metal electrodes 3012, 3013 are formed by vacuum depositing silver. Also, the electrodes 3012, 3013 have a circular portion having a radius of 10 micrometers and a leading electrode portion having a width of 3 micrometers in contrast with the size of 3 mm x 3 mm of the dielectric crystal portion 3011. Moreover, the silver electrode is about 10 nm thick whereas the dielectric crystal portion 3011 is about 50 micrometers thick.

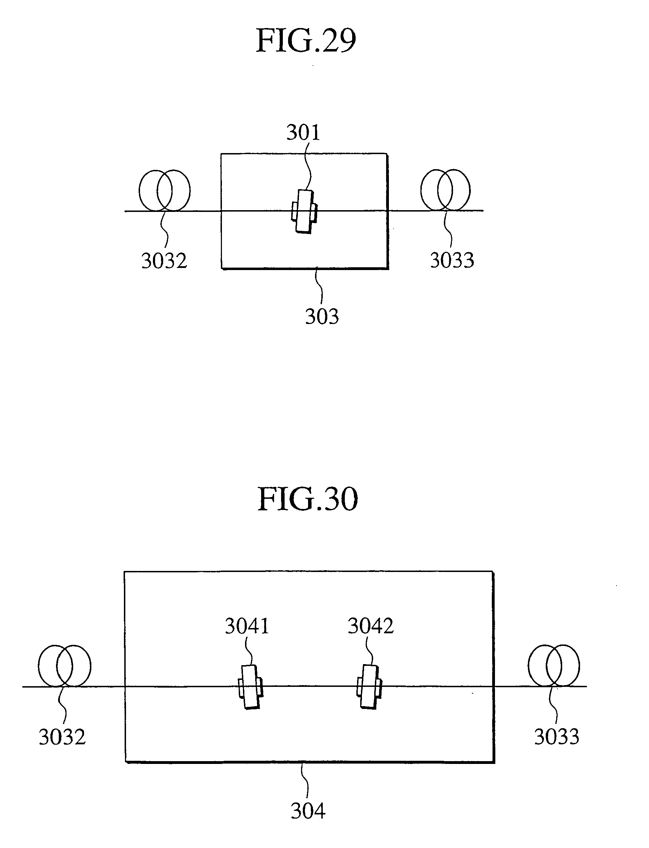

When measuring the light transmission characteristic, the wavelength tunable optical filter 301 is mounted on an optical system as shown in FIG. 29. In order to obtain a light beam having a diameter of 10 micrometers, single mode optical fibers 3032, 3033 having a collimator lens are used.

Capacitance and resistance of the wavelength tunable optical filter 301 concerned were measured to be 60 picofarads (pF) and 6 ohm, respectively. From these values, a time constant turns out to be 360 picoseconds (psec).

With the above configuration, a wavelength tunable optical filter having an FSR of 1.3 THz has been realized. When applying a high frequency voltage of 40 V to the filter, the filter is found out to operate at 380 psec, which verifies a high-speed operation.

Therefore, according to the wavelength tunable optical filter 301 according to this embodiment, a high-speed operation of 38 nm is realized.

By the way, the thin film metal electrodes 3012, 3013 are deposited so as to have the minimum necessary area that corresponds to an area through which the incident light passes, it is apparent that the film should have such an area in order to reduce the resistance of the electrodes even when a metal thin film is coated on the surface of a transparent electrode.

(A sixteenth embodiment)

In a sixteenth embodiment, a difference from the eleventh embodiment will be described.

The sixteenth embodiment utilizes wavelength tunable optical filters 3041, 3042 having substantially the same configuration as the wavelength tunable optical filter 301 according to the fifteenth embodiment. These are Fabry-Perot etalon type filters having a different FSR. Specifically, the wavelength tunable optical filters 3041, 3042 have an FSR of 600 GHz and 700 GHz, respectively. By combining these etalons, an FSR of 4.2 THz is realized as described hereinafter.

In order to realize an FSR of 4.2 THz, the center frequency in the passband of each wavelength tunable optical filter 3041, 3042 needs to be shifted by as much as an FSR. The center frequency is expressed as the equation (10). Changing n in the equation by use of an electro-optic effect causes a shift of the center frequency. In KLTN, $g_{12}$ is -0.038 $m^4/C^2$; $\varepsilon_r$ is 25,000; and $\varepsilon_0$ is 8.854 x $10^{-12}$. By substituting these values into the equations (10), (14) and (15), it is found that a thickness of a KLTN crystal is 115 micrometers and an applied voltage is 111 V for the wavelength tunable optical filter 3041 (FSR 600 GHz), whereas a thickness of a KLTN crystal is 99 micrometers and an applied voltage is 96 V in the wavelength tunable optical filter 3042 (FSR 700 GHz). When a voltage to be applied per one micrometer is calculated with the applied voltage and the thickness mentioned above, the voltage is 0.96 V/micrometer and 0.97 V/micrometer for the wavelength tunable optical filters 3041 (FSR = 600 GHz) and 3042 (FSR = 700 GHz), respectively. In addition, capacitance and resistance measurements have revealed that the wavelength tunable optical filter 3041 has a capacitance of 25 pF and a resistance of 50 Ohm and the wavelength tunable optical filter 3042 has a capacitance of 33 pF and a resistance of 50 Ohm.

A two-stage wavelength tunable optical filter 202 is configured by mounting the above wavelength tunable optical filters 3041, 3042 as shown in FIG. 30. In FIG. 30, reference marks 3043, 3044 represent a single-mode optical fiber equipped with a fiber collimator. The two wavelength tunable optical filters 3041, 3042 are inclined at two degrees compared with a parallelly arranged position. The two filters 3041, 3042 are disposed with a distance of about 2 mm between them. Light having a wavelength of 1.55 micrometers from the fiber collimator is made into a light beam having a diameter of 10 micrometers and introduced into the multistage wavelength tunable optical filter 202. Optical properties of the filter 202 are measured while it is entirely kept at -13 degrees by a Peltier device, resulting in an FSR of 4.1 THz. Then, when the center wavelength in a passband of wavelength tunable optical filters 3042, 3042 is measured while applying a voltage to the wavelength tunable optical filters 3041 and 3042, an FSR of 4.1 THz is observed, which verifies that the filter 202 operates as an optical filter.

Furthermore, when an experiment was carried out for these wavelength tunable optical filters to verify a high-speed operation, it is found that the two-stage wavelength tunable optical filter having an FSR of 4.1 THz is obtained. In addition, when high frequency voltages of 30 V and 25 V are applied to the wavelength tunable optical filters 3041, 3042, respectively, the two-stage wavelength tunable optical filter is found to operate at 100 psec, which verifies a high-speed operation.

Hence, according to this embodiment, a high speed of 100 psec is realized.

As stated above, according to the fifteenth and the sixteenth embodiment, since the electrodes are formed only in an area through which light passes so as to reduce a size of the electrode and thereby reduce capacitance and also the electrodes are formed by silver, which has a low volume resistivity, a high-speed operation at an order of 100 psec is realized. Therefore, the wavelength tunable optical filter according to the fifteenth and the sixteenth embodiment can change the passband wavelength in a wide wavelength tunable range at high speed and then demonstrate sophisticated performance specifically for an add/drop of a packet. At the same time, the wavelength tunable optical filter can be used as a high-speed wavelength sweeper for use in optical measurements. By the way, a wavelength tunable optical filter can demonstrate substantially the same performance even when the filter has only a transparent electrode.

Referring to the various embodiments, a wavelength tunable optical filter according to the present invention has been described. The embodiments above are not intended to limit the scope of the invention. In the embodiments, there can be used "a crystalline material having a composition of $K_{1-y}Li_yTa_{1-x}Nb_xO_3$", "a crystalline material having a composition obtained by replacing K in $KTa_{1-x}Nb_xO_3$ or K and Li in $K_{1-y}Li_yTa_{1-x}Nb_xO_3$ with at least any one of Ba, Sr, and Ca, and replacing Ta and Nb in $KTa_{1-x}Nb_xO_3$ or $K_{1-y}Li_yTa_{1-x}Nb_xO_3$ with Ti", and "a crystalline material having a composition obtained by replacing K in $KTa_{1-x}Nb_xO_3$ or K and Li in $K_{1-y}Li_yTa_{1-x}Nb_xO_3$ with either one of Pb and La and replacing Ta and Nb with either one of Ti and Zr".

In addition, composition ratios x and y are changeable in a range of from 0.1 to 0.5 and from 0 to 0.1, respectively.

Industrial Applicability

The present invention relates to a wavelength tunable optical filter for use in an optical communication, an optical sensing, or the like, the filter being capable of operating at high speed by application of a low voltage and tuning the wavelength in a wider wavelength range.

**Claims**

1. A wavelength tunable optical filter comprising:

   a dielectric crystal portion (2; 28, 30; 38; 112, 117; 182, 184; 202, 204, 206, 208; 2011; 3011) being optically transparent, formed of a dielectric crystal having a cubic system and exhibiting a quadratic electro-optic effect, a mirror portion (5, 6; 27, 29, 31; 39, 41; 111, 115; 181, 185; 201, 205, 209; 2014, 2015) constituting a Fabry-Perot etalon in cooperation with said dielectric crystal portion, and
   an electrode (3, 4; 33, 34, 35, 36; 40, 43; 114, 118; 187, 188; 212, 213, 214, 215; 2012, 2013; 3012, 3013) configured to apply a voltage to said dielectric crystal portion thereby to change a wavelength of light transmitting through said etalon on a basis of said electro-optic effect

2. A wavelength tunable optical filter as recited in claim 1, wherein said electrode (3, 4; 33, 34, 35, 36; 40, 43; 2012, 2013) is optically transparent to incoming light and disposed so as to adjoin said dielectric crystal portion; and wherein said mirror portion (5, 6; 27, 29, 31; 39, 41; 2014, 2015) is a dielectric multilayer mirror formed of a dielectric multilayer film and disposed so as to adjoin said electrode.

3. A wavelength tunable optical filter as recited in claim 2, comprising additionally one or more dielectric crystal portion (38) and transparent electrode (40, 43), wherein said dielectric crystals portion (38) and said transparent electrodes (40, 43) are disposed alternatively with each other to form a multilayer body, and said dielectric multilayer mirror portion (39, 41) is formed so as to sandwich said body.

4. A wavelength tunable optical filter as recited in claim 3, further comprising an additional dielectric multilayer mirror portion, wherein each of said dielectric crystal portions is sandwiched with said transparent electrode, and wherein said additional dielectric multilayer mirror portion is sandwiched with said transparent electrodes.

5. A wavelength tunable optical filter as recited in claim 1, wherein said electrode (3012, 3013) is a metal electrode formed of metal, disposed so as to adjoin said dielectric crystal portion, and serves as said mirror portion.

6. A wavelength tunable optical filter as recited in claim 2 or 3, further comprising a metal film coated on a surface of said transparent electrode.

7. A wavelength tunable optical filter as recited in claim 5, wherein said electrode (3012, 3013) is formed exclusively on an area through which said incoming light passes.

8. A wavelength tunable optical filter as recited in claim 6, wherein said metal film is formed exclusively on an area through which said incoming light passes.

9. A wavelength tunable optical filter as recited in claim 1, wherein said electrode (114, 118; 187, 188; 212, 213, 214, 215) is formed so as to generate two electric fields that are perpendicular with each other and with a transmission direction of light transmitting through said dielectric crystal portion (112, 117; 182, 184; 202, 204, 206, 208).

10. A wavelength tunable optical filter as recited in claim 1, further comprising one or more dielectric crystal portion, wherein said electrode (212, 213, 214, 215) is formed to each of said dielectric crystal portions (202, 204, 206, 208) so as to generate two electric fields in two directions that are perpendicular with each other and with a transmission direction of light transmitting through said dielectric crystal portion.

11. A wavelength tunable optical filter as recited in claim 3 or 10, wherein each of said dielectric crystal portions has a different FSR.

12. A wavelength tunable optical filter as recited in either one of claims 9 to 11, further comprising an insulating layer (113; 183; 203, 207) formed of an insulating material having an electric permittivity smaller than that of said dielectric crystal portion, said insulating layer being interposed so as to divide said dielectric crystal portion into a first portion in which an electric field is generated in one of said two directions and a second portion in which an electric field is generated in the other of said two directions.

13. A wavelength tunable optical filter as recited in claim 12, wherein said insulating material comprises any one of $TeO_2$-rich glass, $SiO_2$, $Al_2O_3$ and polymer, or any complex thereof.

14. A wavelength tunable optical filter as recited in any one of claims 1 to 13, further comprising a temperature controller configured to control a temperature of a dielectric crystal constituting said dielectric crystal portion.

15. A wavelength tunable optical filter as recited in any one of claims 1 to 8, wherein a dielectric crystal constituting said dielectric crystal portion is single crystalline and an axis direction of one of crystal axes is in agreement with a transmission direction of light transmitting through said dielectric crystal portion.

16. A wavelength tunable optical crystal as recited in any one of claims 1 to 8, wherein a dielectric crystal constituting said dielectric crystal is polycrystalline and at least one of axis directions of crystal axes is in agreement with the transmission direction of light transmitting through said dielectric crystal portion.

17. A wavelength tunable optical filter as recited in any one of claims 1 to 16, wherein said dielectric crystal has a composition of $K_{1-y}Li_yTa_{1-x}Nb_xO_3$.

18. A wavelength tunable optical filter as recited in any one of claims 1 to 16, wherein said dielectric crystal has a composition of which all of K in $KTa_{1-x}Nb_xO_3$ or all of K and Li in $K_{1-y}Li_yTa_{1-x}Nb_xO_3$ are substituted with at least one of Ba, Sr and Ca, and all of Ta and Nb in $K_{1-y}Li_yTa_{1-x}Nb_xO_3$ are substituted with Ti.

19. A wavelength tunable optical filter as recited in any one of claims 1 to 16, wherein said dielectric crystal has a composition of which all of K in $KTa_{1-x}Nb_xO_3$ or all of K and Li in $K_{1-y}Li_yTa_{1-x}Nb_xO_3$ are substituted with at least one of Ba, Sr and Ca, and all of Ta and Nb in $K_{1-y}Li_yTa_{1-x}Nb_xO_3$ are substituted with either one of Ti and Zr.

20. A wavelength tunable optical filter as recited in any one of claims 17 to 19, wherein said x as a first composition ratio is 0.1 or greater and 0.5 or smaller, and wherein said y as a second composition ratio is 0 or greater and less than 0.1.

**21.** A multi-stage wavelength tunable optical filter comprising more than two wavelength tunable optical filters as recited in any one of claims 1 to 20, wherein each of said wavelength tunable optical filter is arranged along a transmission direction of light incident thereon.

**22.** A multi-stage wavelength tunable optical filter as recited in claim 21, wherein a face perpendicular to said transmission direction of the light is inclined at an angle of 2 degrees or more with a face perpendicular to a crystal axis of the dielectric crystal constituting the dielectric crystal portion of each of said wavelength tunable optical filter.

# FIG.1

LIGHT INCIDENT DIRECTION

# FIG.2

EP 1 659 445 A1

# FIG.3

# FIG.4

$\lambda 0 = 1530\text{nm}$
$\text{FSR} = 40\text{nm}$

# FIG.5

# FIG.6

# FIG.7

1GHz
1570nm

1ns

# FIG.8

LIGHT INCIDENT DIRECTION

# FIG.9

# FIG.10

LIGHT INCIDENT DIRECTION

# FIG.11

LIGHT INCIDENT DIRECTION 110

111

112

113

118

114

115

117

116

# FIG.12

EP 1 659 445 A1

# FIG.13

# FIG.14

# FIG.15

# FIG.16

# FIG.17

1nsec

# FIG.18A

## FIG.18B

LIGHT INCIDENT DIRECTION 180

181
188
182
188
183
188
184
187
185
187
187
188
188
186

ELECTRIC FIELD

188

188

## FIG.18C

187

ELECTRIC FIELD

187

EP 1 659 445 A1

# FIG.19

APPLIED VOLTAGE (V)

# FIG.20

# FIG.21

# FIG.22

201

2012    2013

2014    2011    2015

# FIG.23

2021    2022

2025

2023

2° 2°    2020    2024

2026

# FIG.24

# FIG.25

# FIG.26

# FIG.27

301

3013

3012

3011

# FIG.28

301

3011

3012

# FIG.29

301

3032

303

3033

# FIG.30

3041

3042

3032

304

3033

## INTERNATIONAL SEARCH REPORT

International application No.

PCT/JP2004/008567

### A. CLASSIFICATION OF SUBJECT MATTER
Int.Cl⁷ G02F1/35, G02B5/28

According to International Patent Classification (IPC) or to both national classification and IPC

### B. FIELDS SEARCHED

Minimum documentation searched (classification system followed by classification symbols)
Int.Cl⁷ G02F1/35, G02B5/28

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)
JSTPuls

### C. DOCUMENTS CONSIDERED TO BE RELEVANT

| Category* | Citation of document, with indication, where appropriate, of the relevant passages | Relevant to claim No. |
|---|---|---|
| Y<br>A | JP 61-88229 A (NEC Corp.),<br>06 May, 1986 (06.05.86),<br>Full text; all drawings<br>(Family: none) | 1-8,11,14-22<br>9,10,12,13 |
| Y<br>A | JP 2003-35831 A (Nippon Telegraph And Telephone Corp.),<br>07 February, 2003 (07.02.03),<br>Par. Nos. [0024] to [0026], [0090]<br>& EP 1260839 A2<br>Par. Nos. [0022] to [0025], [0085]<br>& US 2003-72550 A1 | 1-8,11,14-22<br>9,10,12,13 |

☒ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>06 July, 2004 (06.07.04) | Date of mailing of the international search report<br>20 July, 2004 (20.07.04) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2004/008567 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2001-21852 A  (Nippon Telegraph And Telephone Corp.),<br>26 January, 2001 (26.01.01),<br>Par. Nos. [0027], [0036]<br>(Family: none) | 3,18 |
| Y | Hikari Hakumaku Gijutsu Manual, The Optronics Co., Ltd., 31 August, 1992 (31.08.92), Zoho Kaiteiban, pages 284 to 286; particularly, page 285, lower left column, line 3 from the bottom to lower right column, line 3 from the bottom | 4,21 |
| Y | JP 2002-236275 A  (TDK Corp.),<br>23 August, 2002 (23.08.02),<br>Par. No. [0011]<br>(Family: none) | 19,20 |
| Y | JP 2001-174629 A  (Nikon Corp.),<br>29 June, 2001 (29.06.01),<br>Par. Nos. [0090], [0091]<br>(Family: none) | 22 |
| P,Y | JP 2003-207753 A  (Santekku Kabushiki Kaisha),<br>25 July, 2003 (25.07.03),<br>Par. No. [0037]; Fig. 2<br>(Family: none) | 22 |

Form PCT/ISA/210 (continuation of second sheet) (January 2004)